# EUROPEAN PATENT SPECIFICATION

(11) **EP 1 653 099 B1**
(45) Date of publication and mention of the grant of the patent: **31.12.2014**
(21) Application number: 04748211.2
(22) Date of filing: 03.08.2004
(51) Int. Cl.: F16D 1/06

(54) **POWER TRANSMISSION MECHANISM OF SHAFT AND HUB**
KRAFTÜBERTRAGUNGSMECHANISMUS FÜR WELLE UND NABE
MECANISME DE TRANSMISSION DE PUISSANCE D'UN ARBRE ET D'UN MOYEU

(30) Priority: 07.08.2003 JP 2003288906; 07.08.2003 JP 2003288918; 07.08.2003 JP 2003288924; 15.06.2004 JP 2004176647; 15.06.2004 JP 2004176656
(43) Date of publication of application: 03.05.2006
(73) Proprietor: HONDA MOTOR CO., LTD., Tokyo 107-8556 (JP)
(72) Inventor: IGARASHI, Masahiko, Mooka-shi, Tochigi 321-4346 (JP); MOCHIZUKI, Takeshi, Mooka-shi, Tochigi 321-4346 (JP); KOSUGI, Masanori, Mooka-shi, Tochigi 321-4346 (JP)
(74) Representative: Herzog, Markus
(86) International application number: PCT/JP2004/011079
(87) International publication number: WO 2005/015040

(56) References cited:
- DE-U1- 9 116 324
- FR-A- 2 562 969
- JP-A- 11 514 079
- JP-A- 2000 097 244
- JP-A- 2001 287 122
- JP-A- 2001 343 023
- JP-B1- 33 010 508
- US-A- 5 503 494
- US-A- 5 660 494
- US-A- 6 142 033

## Description

### TECHNICAL FIELD

The present invention relates to a power transmitting mechanism for transmitting torque smoothly between two members comprising a shaft and a hub.

### BACKGROUND ART

On motor vehicles such as automobiles, there have been employed a set of constant velocity joints for transmitting drive power from an engine through a shaft to axles. Each constant velocity joint comprises an outer member, an inner member, and a torque transmitting member disposed between the outer and inner members for transmitting torque between the outer and inner members. The constant velocity joint includes a shaft/hub unit having a tooth assembly which comprises a shaft tooth section on the shaft and a hub tooth section on a hub, the shaft tooth section and the hub tooth section being held in mesh with each other.

In recent years, there have been demands for efforts to reduce circumferential backlash of constant velocity joints which is caused by the chattering of the power transmitting system. Heretofore, attempts have been made to reduce backlash between the inner ring and the shaft with a constant velocity joint having shaft serrations tilted at a torsional angle. Depending on the direction of the torsional angle and the direction of the torque load, the mechanical strength and service life of the inner ring and the shaft are likely to vary from product to product.

In the art of gears, technical concepts for crowning tooth surfaces have been disclosed in Japanese Laid-Open Patent Publication No. 2-62461, Japanese Laid-Open Patent Publication No. 3-69844, and Japanese Laid-Open Patent Publication No. 3-32436, for example.

Japanese Laid-Open Patent Publication No. 11-514079 reveals a shaft/hub unit having a tooth assembly for transmitting torque. The disclosed tooth assembly includes a shaft tooth section having a constant outside diameter in the longitudinal direction and a hub tooth section having a constant base diameter in the longitudinal direction. The shaft tooth section has a base diameter (dw1) and the hub tooth section has an inside diameter (Dn1) in a first region at a shaft end. The shaft tooth section also has a base diameter (dw2) and the hub tooth section has an inside diameter (Dn2) in a second region near a shaft shank. The base diameter (dw2) of the shaft tooth section and the inside diameter (Dn2) of the hub tooth section in the second region are set to respective values greater than the base diameter (dw1) of the shaft tooth section and the inside diameter (Dn1) of the hub tooth section in the first region (dw1 < dw2, Dn1 < Dn2).

Japanese Laid-Open Patent Publication No. 2000-97244 on a splined connection between a shaft member and an outer circumferential member discloses that the shaft member has, near a shaft shank thereof, a larger-diameter region where the diameter of the shaft member at the bottom lands between the teeth is increased, and the teeth of the shaft member and the teeth of the outer circumferential member mesh with each other in the larger-diameter region.

The applicant of the present application has proposed a spline shaft wherein the crowning top is positioned where the stress is minimized when torque is applied to a region where the spline shaft and a constant velocity joint mesh with each other, thereby preventing the stress from concentrating on certain regions and simplifying the overall structure of the spline shaft (see Japanese Laid-Open Patent Publication No. 2001-287122).

US-A-6 142 033 on which the preamble of claim 1 is based, discloses:
A mechanism for transmitting torque between a shaft and a hub disposed around the shaft while holding a shaft tooth section formed on the shaft and a hub tooth section formed on the hub in engagement with each other, wherein
said shaft tooth section has a valley having an outside diameter varying from an end thereof toward a shaft shank of the shaft; and
said hub tooth section has a straight peak having a constant tooth thickness and having an inside diameter varying from an end thereof toward said shaft shank and a valley having a constant inside diameter in the axial direction of the shaft.
FR-A-2 562 969 disdoses:
a mechanism for transmitting torque between a shaft and a hub disposed around the shaft while holding a shaft tooth section formed on the shaft and a hub tooth section formed on the hub in engagement with each other, wherein
said shaft tooth section has a crowned peak having a varying tooth thickness and a valley having an outside diameter varying from an end of the shaft toward a shaft shank of the shaft; and
said hub tooth section is straight and has a constant tooth thickness,
said hub tooth section having a peak and a valley which have a constant inside diameter in the axial direction of the shaft from the end toward said shaft shank.

### DISCLOSURE OF THE INVENTION

### PROBLEMS TO BE SOLVED BY THE INVENTION

It is a general object of the present invention to provide a power transmitting mechanism for a shaft and a hub, which is designed to prevent stresses from concentrating on certain regions for increased static mechanical strength and fatigue strength.

### MEANS FOR SOLVING THE PROHLEMS

For achieving this object, a mechanism in accordance with claim 1 is provided.

According to the present invention, when torque is applied to a portion between a shaft and a hub wherein a shaft tooth section and a hub tooth section are held in mesh with each other, by increasing the outside diameter of a valley of the shaft tooth section, which is a stress concentrating region, the stresses are distributed and strength of the shaft is increased.

Further, according to the present invention, since a changing point of the outside diameter of the valley of the shaft tooth section and a changing point of the inside diameter of a peak of the hub tooth section are offset from each other by a predetermined distance, the stresses imposed on the shaft tooth section are distributed to one changing point and the other changing point, thereby relaxing stress concentration. As a result, the stress concentration is relaxed and distributed, thus increasing static mechanical strength and fatigue strength of the area where the shaft tooth section and the hub tooth section mesh with each other.

Furthermore, according to the present invention, it is preferable to establish different major load transmitting regions depending on the magnitude of the load applied to the area where the shaft tooth section and the hub tooth section mesh with each other. For example, if the loads are classified into a low load, a medium load, and a high load, the main load transmitting regions for transmitting the low load, the medium load, and the high load are established successively in a direction from a crowning top toward a shaft shank, thus relaxing the concentration of stresses on particular areas.

### BRIEF DESCRIPTION OF THE DRAWINGS

FIG. 1 is a perspective view, partly cut away, of a shaft/hub unit which incorporates a power transmitting mechanism according to a first embodiment of the present invention;
FIG. 2A is an enlarged partial transverse cross-sectional view showing a shaft tooth section and a hub tooth section which are held in mesh with each other with no load applied thereto;
FIG. 2B is an enlarged partial transverse cross-sectional view showing a shaft tooth section and a hub tooth section which are held in mesh with each other with torque applied thereto in the direction indicated by the arrow Y;
FIG. 3 is an enlarged partial longitudinal cross-sectional view in the axial direction of a shaft, showing a peak of the hub tooth section which engages in a valley of the shaft tooth section shown in FIG. 1;
FIG. 4 is an enlarged partial longitudinal cross-sectional view showing a first step region slanted at a smaller tilt angle θ of the shaft shown in FIG. 3;
FIG. 5 is an enlarged partial longitudinal cross-sectional view showing a tooth of the shaft tooth section whose outside diameter varies toward a shaft shank of the shaft shown in FIG. 4;
FIG. 6 is a diagram showing the relationship between the tilt angle θ of the first step region of the shaft tooth section, stress relaxation, and productivity;
FIG. 7 is a graph showing the relationship between stresses developed on the shaft and positions where the stresses are measured, with respect to a shaft wherein a first step region and a second step region are not formed in a shaft tooth section and a hub tooth section and a shaft wherein a first step region and a second step region are formed in a shaft tooth section and a hub tooth section;
FIG. 8 is a graph showing the relationship between stresses developed on the shaft and positions where the stresses are measured with respect to a shaft wherein a first step region is slanted at a much smaller tilt angle θ;
FIG. 9 is a graph showing the relationship between stresses developed on the shaft and positions where the stresses are measured, with respect to a shaft wherein a changing point of the diameter of a shaft tooth section and a changing point of the diameter of a hub tooth section are offset from each other and to a shaft wherein a changing point of the diameter of a shaft tooth section and a changing point of the diameter of a hub tooth section are not offset from each other;
FIG. 10 is a graph showing the relationship between stresses developed on the shaft and positions where the stresses are measured when the stresses are produced in response to an input load imposed at the time torque is applied;
FIG. 11 is a graph showing the relationship between positions where loads are applied and the classification of the loads;
FIG. 12 is an enlarged partial longitudinal cross-sectional view taken along line XII - XII of FIG. 3;
FIG. 13 is an enlarged partial longitudinal cross-sectional view taken along line XIII - XIII of FIG. 3;
FIG. 14 is an enlarged partial longitudinal cross-sectional view taken along line XIV - XIV of FIG. 3;
FIG. 15 is a perspective view, partly cut away, of a shaft/hub unit which incorporates a power transmitting mechanism according to a second embodiment of the present invention;
FIG. 16 is an enlarged partial longitudinal cross-sectional view in the axial direction of a shaft, showing a peak of a hub tooth section which engages in a valley of a shaft tooth section shown in FIG. 15;
FIG. 17 is an enlarged partial longitudinal cross-sectional view showing that a point P1 as a starting point of an arcuate region formed in the shaft tooth section and a point P2 as a starting point of a step region formed in a the hub tooth section are vertically aligned with each other without being offset;
FIG. 18 is a graph showing the relationship between stresses developed on the shaft and positions where the stresses are measured, with respect to a shaft wherein no step region is formed in a hub tooth section and a shaft wherein an arcuate region is formed in a shaft tooth section and a step region is formed in a hub tooth section;
FIG. 19 is a graph showing the relationship between stresses developed on the shaft and positions where the stresses are measured, with respect to a shaft wherein a changing point of the diameter of a shaft tooth section and a changing point of the diameter of a hub tooth section are offset from each other and to a shaft wherein a changing point of the diameter of a shaft tooth section and a changing point of the diameter of a hub tooth section are not offset from each other;
FIG. 20 is an enlarged partial longitudinal cross-sectional view taken along line XX - XX of FIG. 16;
FIG. 21 is an enlarged partial longitudinal cross-sectional view taken along line XXI - XXI of FIG. 16;
FIG. 22 is an enlarged partial longitudinal cross-sectional view taken along line XXII - XXII of FIG. 16;
FIG. 23 is a perspective view, partly cut away, of a shaft/hub unit which incorporates a power transmitting mechanism according to a third embodiment of the present invention;
FIG. 24 is an enlarged partial longitudinal cross-sectional view in the axial direction of a shaft, showing a peak of a hub tooth section which engages in a valley of a shaft tooth section shown in FIG. 23;
FIG. 25 is an enlarged partial longitudinal cross-sectional view showing a tooth of the shaft tooth section whose outside diameter varies toward a shaft shank of the shaft shown in FIG. 24;
FIG. 26 is a diagram showing the relationship between the rise angle θ of a tapered region of the shaft tooth section, stress relaxation, and productivity;
FIG. 27 is a graph showing the relationship between stresses developed on the shaft and positions where the stresses are measured, with respect to a shaft wherein a tapered region and a step region are not formed in a shaft tooth section and a hub tooth section and a shaft wherein a tapered region and a step region are formed without being offset;
FIG. 28 is a graph showing the relationship between stresses developed on the shaft and positions where the stresses are measured, with respect to a shaft wherein a tapered region and a step region are not formed in a shaft tooth section and a hub tooth section and a shaft wherein starting points of a tapered region and a step region are offset from each other;
FIG. 29 is a graph showing the relationship between stresses developed on the shaft and positions where the stresses are measured, with respect to a shaft wherein a changing point of the diameter of a shaft tooth section and a changing point of the diameter of a hub tooth section are offset from each other and to a shaft wherein a changing point of the diameter of a shaft tooth section and a changing point of the diameter of a hub tooth section are not offset from each other;
FIG. 30 is an enlarged partial longitudinal cross-sectional view taken along line XXX - XXX of FIG. 24;
FIG. 31 is an enlarged partial longitudinal cross-sectional view taken along line XXXI - XXXI of FIG. 24;
FIG. 32 is an enlarged partial longitudinal cross-sectional view taken along line XXXII - XXXII of FIG. 24;
FIG. 33 is a perspective view, partly cut away, of a shaft/hub unit which incorporates a power transmitting mechanism according to a fourth embodiment of the present invention;
FIG. 34 is an enlarged partial longitudinal cross-sectional view in the axial direction of a shaft, showing a peak of a hub tooth section which engages in a valley of a shaft tooth section shown in FIG. 33; this example does not fall under the scope of the present invention.
FIG. 35 is an enlarged partial longitudinal cross-sectional view showing a first tapered region having a small tilt angle θ in a step region of the shaft shown in FIG. 34; this example does not fall under the scope of the present invention.
FIG. 36 is an enlarged partial longitudinal cross-sectional view in the axial direction of the shaft, showing that a hub having a second tapered region in a hub tooth section engages the shaft shown in FIG. 35;
FIG. 37 is an enlarged partial longitudinal cross-sectional view in the axial direction of the shaft, showing that a hub having an arcuate of predetermined radius of curvature in a hub tooth section engages the shaft shown in FIG. 35;
FIG. 38 is an enlarged partial longitudinal cross-sectional view showing a tooth of the shaft tooth section whose outside diameter varies toward a shaft shank of the shaft shown in FIG. 35; this example does not fall under the scope of the present invention.
FIG. 39 is a diagram showing the relationship between the tilt angle θ of the step region of the shaft tooth section, stress relaxation, and productivity;
FIG. 40 is a graph showing the relationship between stresses developed on the hub and positions where the stresses are measured, with respect to a shaft wherein a step region is not formed in a shaft tooth section and a shaft wherein a step region is formed in a shaft tooth section;
FIG. 41 is a graph showing the relationship between stresses developed on the shaft and positions where the stresses are measured in a state wherein the tilt angle θ of the step region is smaller;
FIG. 42 is an enlarged partial longitudinal cross-sectional view taken along line XLII - XLII of FIG. 34;
FIG. 43 is an enlarged partial longitudinal cross-sectional view taken along line XLIII - XLIII of FIG. 34;
FIG. 44 is an enlarged partial longitudinal cross-sectional view taken along line XLIV - XLIV of FIG. 34;
FIG. 45 is an enlarged longitudinal cross-sectional view of a modification wherein spline teeth in a shaft tooth section and a hub tooth section are of an involute shape; and
FIG. 46 is a fragmentary perspective view showing the manner in which the spline teeth of a shaft tooth section are formed by rolling racks.

### BEST MODE FOR CARRYING OUT THE INVENTION

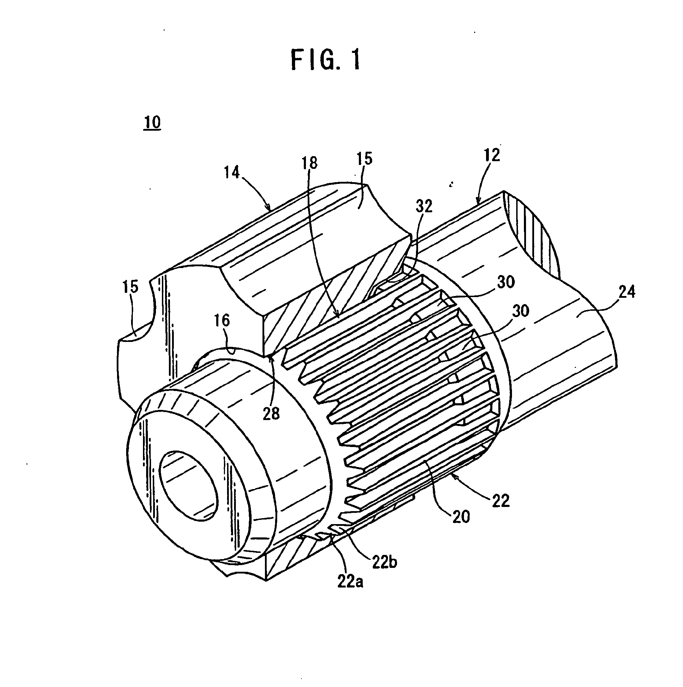

FIG. 1 shows a shaft/hub unit 10 which incorporates a power transmitting mechanism according to a first embodiment of the present invention. The shaft/hub unit 10 serves as part of a constant velocity joint. The shaft/hub unit 10 comprises a shaft 12 functioning as a power transmitting shaft and a hub 14 functioning as an inner ring that is disposed in openings in an outer cup (not shown) and has guide grooves 15 receiving therein balls (not shown).

The shaft 12 has fitting portions 18 on its respective opposite ends each fitting in an axial hole 16 in the hub 14. In FIG. 1, only one end of the shaft 12 is shown, with the other end omitted from illustration. The fitting portion 18 has a shaft tooth section 22 comprising a plurality of straight spline teeth 20 which have a predetermined tooth length in the axial direction of the shaft 12 and which are formed successively in the circumferential direction of the shaft 12. Specifically, the shaft tooth section 22 comprises a circumferentially alternate succession of convex peaks 22a and concave valleys 22b.

The shaft 12 has a shaft shank 24 extending from an end of the shaft tooth section 22 which is closer to the center of the shaft 12. A retaining ring (not shown) is mounted in an annular groove (not shown) defined in the end of the shaft 12 for preventing the hub 14 from being released from the shaft 12.

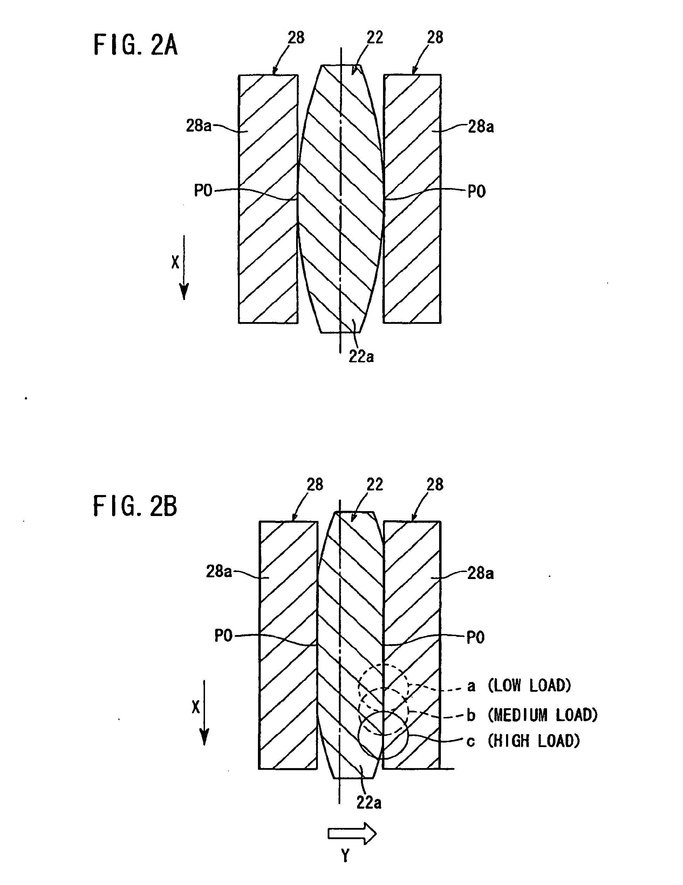

When the shaft 12 is viewed radially inwardly, as shown in FIG. 2A, each peak 22a of the shaft tooth section 22 is crowned such that the tooth thickness is maximum at a crowning top P0 and progressively decreases from the crowning top P0 toward the opposite ends of the peak 22a. Stated otherwise, the peak 22a as it is viewed in plan has a crowning shape whose opposite sides are equally curved as shown in FIG. 2A.

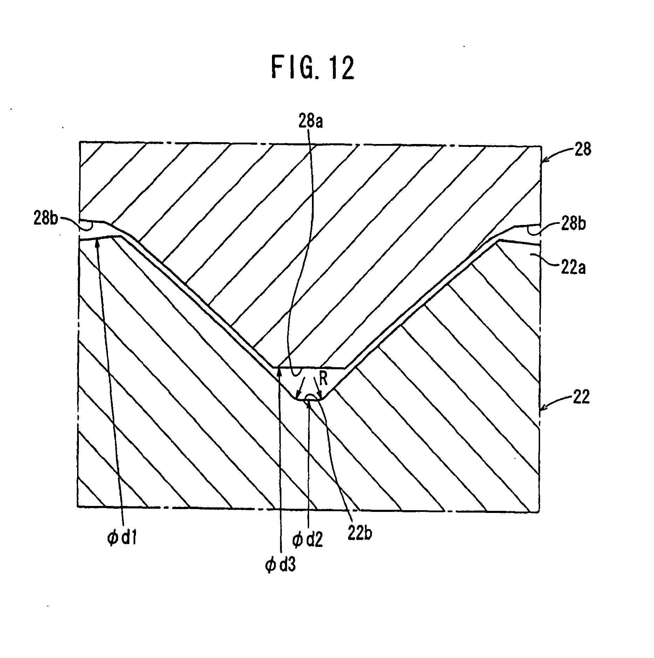

The hub 14 has, on the inner circumferential surface of the axial hole 16, a hub tooth section 28 having a plurality of straight spline teeth 26 that fit in the fitting portion 18 of the shaft 12. Specifically, the hub tooth section 28 comprises a circumferentially alternate succession of convex peaks 28a and concave valleys 28b (see FIGS. 12 through 14). As shown in FIG. 2A, the peaks 28a have substantially the same tooth thickness and extend substantially parallel to the axial direction of the shaft 12.

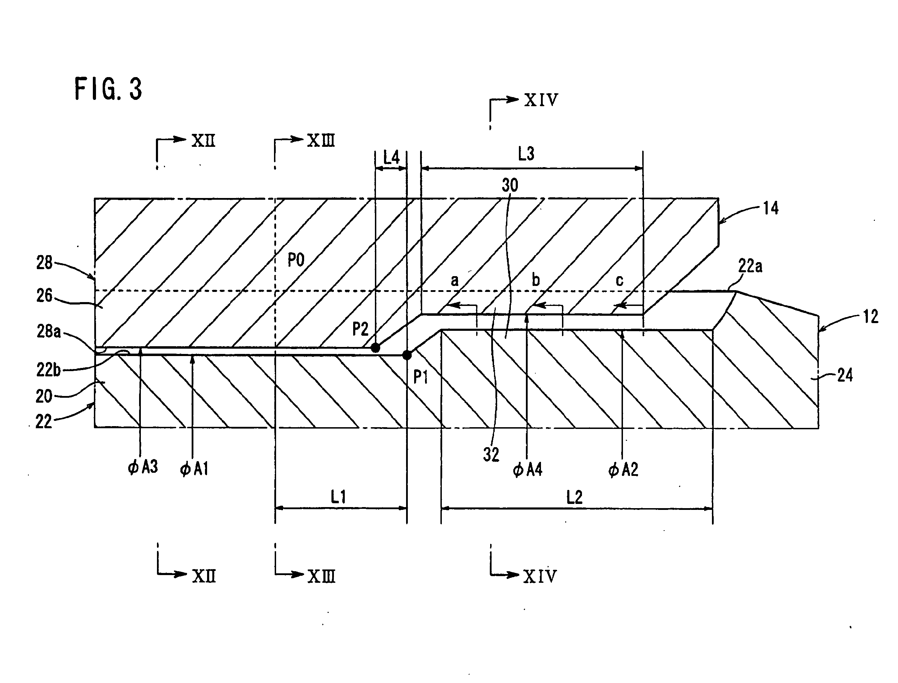

FIG. 3 shows, in enlarged partial longitudinal cross section in the axial direction of the shaft 12, that a peak 28a of the hub tooth section 28 engages in a valley 22b of the shaft tooth section 22. In FIG. 3, a position corresponding to the crowning top is represented by P0.

A point P1 (changing point) is established on the bottom land of the valley 22b at a position which is displaced horizontally a predetermined distance L1 toward the shaft shank 24 from a position (see the broken-line) on the bottom land of the valley 22 (valley radius φA1) in alignment with the crowning top P0. From the point P1, the bottom land of the valley 22 is raised radially outwardly toward the hub tooth section 28, providing a first step region 30 having a valley radius φA2. The first step region 30 extends horizontally a predetermined distance L2 toward the shaft shank 24 and is joined to the shaft shank 24.

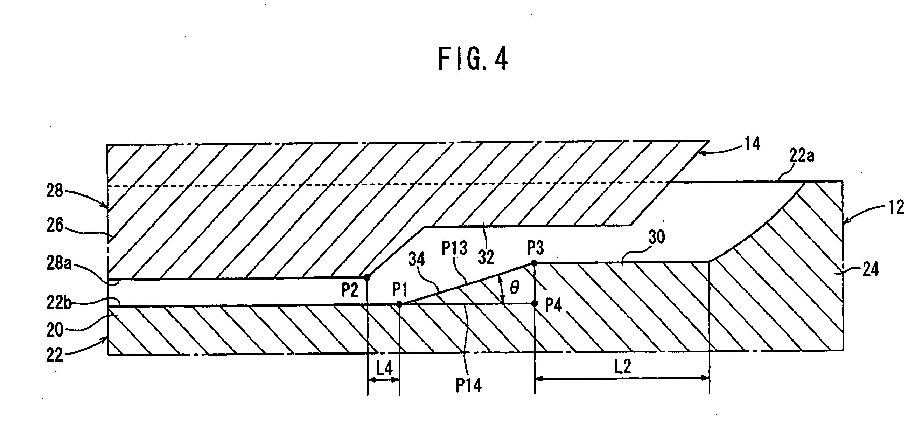

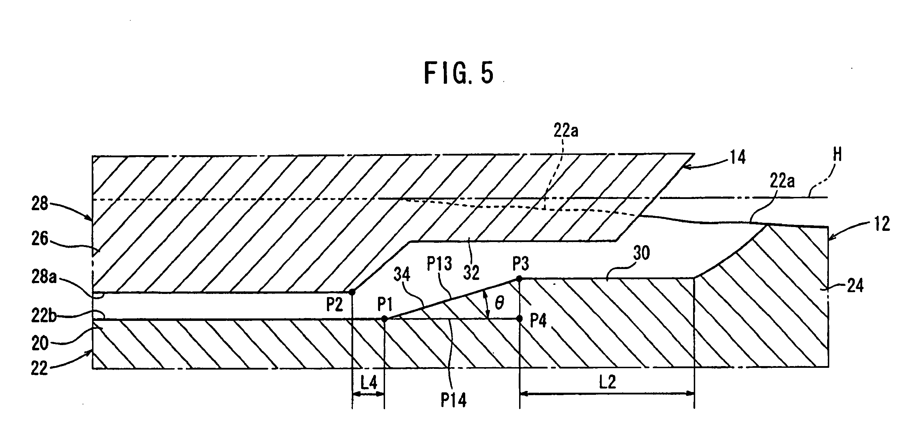

The first step region 30 of the shaft tooth section 22 may have a slanted surface or an arcuate curved surface or a compound surface having a predetermined radius of curvature. The peak 22a of the shank tooth section 22 has an outside diameter which may remain constant in the axial direction, as shown in FIGS. 3 and 4, or which may progressively decrease from an area close to the point P1 toward the shaft shank 24, as shown in FIG. 5. With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 5, the reference character "H" represents a horizontal line to be compared with a change (reduction) in the outside diameter of the peak 22a.

On the peak 28a of the hub tooth section 28, there is established a point P2 at a position which is offset a predetermined distance L4 from the point P1 in the shaft tooth section 22 in a horizontal direction away from the shaft shank 24. From the point P2, the peak 28a changes its peak radius φA3 to a peak radius φA4, providing a second step region 32 with the peal radius φA4. The second step region 32 extends horizontally a predetermined distance L3 toward the shaft shank 24.

The second step region 32 of the hub tooth section 28 may have a slanted surface or an arcuate curved surface or a compound surface having a predetermined radius of curvature, and may be of a shape different from the shape of the first step region 30. The tilt angle of the second step region 32 is set as desired complementarily to the tilt angle of the first step region 30. The shape of the hub tooth section 28 is not limited to the shape of the second step region 32, but may include a round shape, a tapered tape, or the like having a predetermined radius of curvature. The valleys 28b of the hub tooth section 28 have an inside diameter which remains constant in the axial direction.

The valley radii φA1, φA2 represent respective distances from the central axis of the shaft 12 to the bottom lands of the valley 22b of the shaft tooth section 22. The peak radii φA3, φA4 represent respective distances from the central axis of the shaft 12 to the top lands of the peak 28a of the hub tooth section 28.

The distance L2 in the shaft tooth section 22 may be set to a value greater than the distance L1 in the shaft tooth section 22 (L1 < L2) in order to establish different major load transmitting regions for transmitting different loads including a low load, a medium load, and a high load, for example, depending on the magnitude of the load applied to the area where the shaft tooth section 22 and the hub tooth section 28 mesh with each other. The distance L2 in the shaft tooth section 22 and the distance L3 in the hub tooth section 22 may be set to substantially equal values (L2 ≈ L3), and or the distance L3 in the hub tooth section 22 may be set to a value greater than the distance L2 in the shaft tooth section 22 (L2 < L3), for allowing an offset (described later) to be easily established depending on dimensional tolerance and dimensional accuracy and also for improving the ease in assembling the shaft 12 and the hub 14 together.

As can be seen from FIG. 3, the point P1 as a starting point (changing point) where the first step region 30 of the shaft tooth section 22 starts to rise and the point P2 as a starting point (changing point) where the second step region 32 of the hub tooth section 28 starts to rise are offset substantially horizontally from each other by a predetermined distance L4.

Therefore, when torque is applied to the shaft/hub unit 10 wherein the shaft tooth section 22 and the hub tooth section 28 mesh with each other, since the point P1 in the shaft tooth section 22 and the point P2 in the hub tooth section 28 are offset from each other by the distance L4, the stresses imposed on the shaft/hub unit 10 are distributed to the points P1, P2, thereby relaxing stress concentration.

According to the first embodiment, as a result, the stresses are prevented from concentrating on, but are distributed to, the shaft tooth section 22 and the hub tooth section 28, thus increasing static mechanical strength and fatigue strength of the area where the shaft tooth section 22 and the hub tooth section 28 mesh with each other.

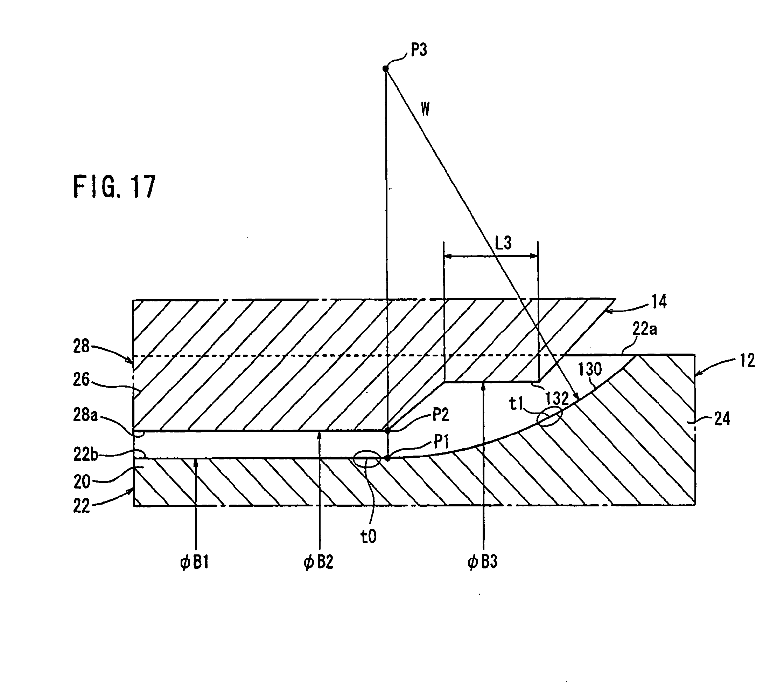

As with an example which does not fall within the scope of the invention, to be described later with reference to FIG. 17, the points P1, P2 may be vertically aligned with each other without being offset from each other. With such an arrangement, the first step region 30 in the shaft tooth section 22 and the second step region 32 in the hub tooth section 28 coact with each other in distributing the stresses applied to the first step region 30 and relaxing stress concentration.

In FIG. 4, a right-angled triangle formed by interconnecting points P1, P3, P4 may have its cross-sectional area increased, and the angle θ formed between a line segment P14 interconnecting the points P1, P4 and a line segment P13 interconnecting the points P1, P3, i.e., the tilt angle θ of the first step region 30, may be set to a predetermined value for further relaxing stress concentration with a tapered surface 34 of the first step region 30.

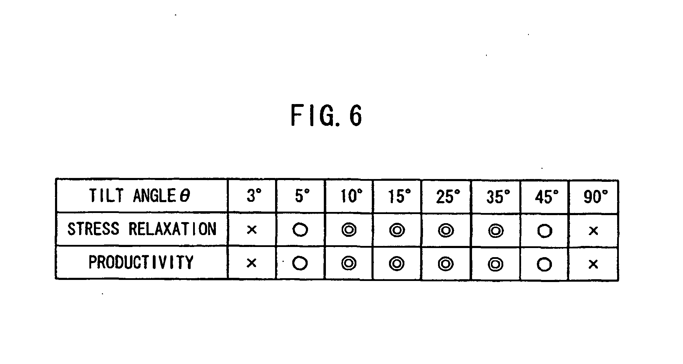

The relationship between the tilt angle θ of the first step region 30, stress relaxation, and productivity is shown in FIG. 6. It can be seen from FIG. 6 that stress relaxation and productivity are good (see symbol "○") if the tilt angle θ is set to a value in the range from 5 degrees to 45 degrees, and optimum (see symbol " 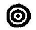 ") if the tilt angle θ is set to a value in the range from 10 degrees to 35 degrees.

If the tilt angle θ is set to 3 degrees, no sufficient stress distribution capability is available, and it is difficult to manufacture the shaft tooth section 22 with rolling racks, to be described later. If the tilt angle θ is set to 90 degrees, excessive stresses concentrate on the first step region 30, and the durability of rolling racks used to manufacture the shaft tooth section 22 is reduced.

An ordinary shaft/hub spline fitting arrangement which is free of the first and second step regions 30, 32 has a stress peak point produced in the vicinity of the shaft shank. According to the first embodiment, however, the first step region 30 is provided in the shaft tooth section 22 to allow some stresses to concentrate on the point P1, thus distributing stresses that tend to concentrate on the shaft shank 24. If the tilt angle θ of the first step region 30 in the shaft tooth section 22 is set to too a large value, e.g., 90 degrees, for example, then excessive stresses concentrate on the point P1, failing to provide a stress distributing (stress relaxing) capability. By setting the tilt angle θ, i.e., the rise angle, of the first step region 30 to an appropriate value, the concentration of stresses in the vicinity of the shaft shank 24 is suitably distributed to reduce stresses at the peak point.

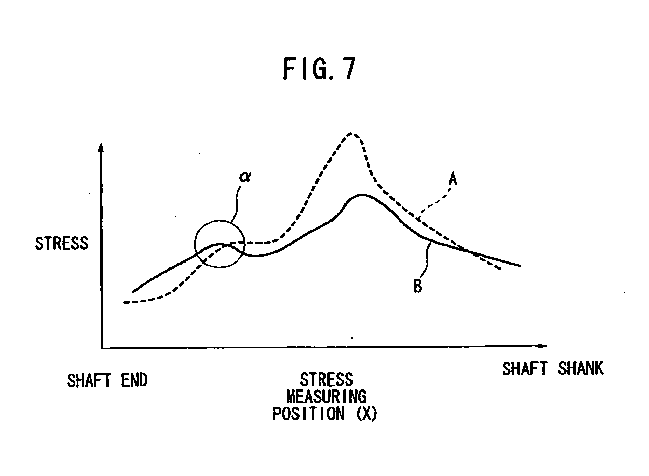

FIG. 7 shows a characteristic curve A (broken-line curve) of stresses on a comparative shaft wherein the first step region 30 and the second step region 32 are not formed in the shaft tooth section 22 and the hub tooth section 28 and a characteristic curve B (solid-line curve) of stresses on a shaft wherein the points P1, P2 are offset from each other by a predetermined distance and the tilt angle θ of the first step region 30 is set to a large value. A comparison between the characteristic curve A and the characteristic curve B indicates that according to the characteristic curve B which represents the structure having the tapered surface 34, the peak of stresses is reduced and the concentration of stresses is relaxed.

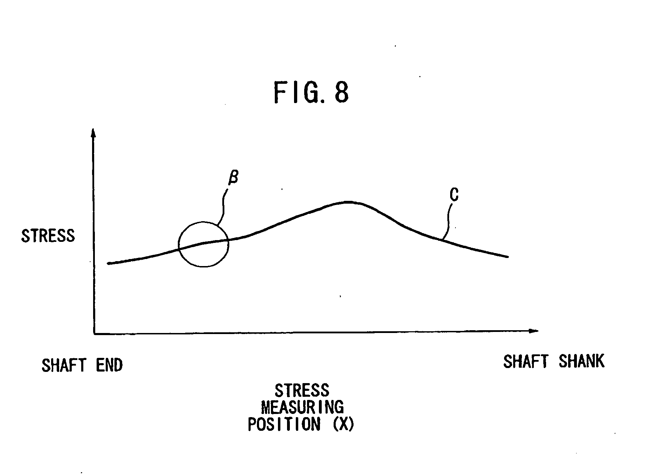

FIG. 8 shows a characteristic curve C of stresses on a shaft wherein the tilt angle θ of the first step region 30 is smaller than with the characteristic curve B. It can be understood from FIG. 8 that by reducing the tilt angle θ to increase the size of the tapered surface 34, the tapered surface 34 is capable of more relaxing stresses (compare a portion α of the characteristic curve B shown in FIG. 7 and a portion β of the characteristic curve C shown in FIG. 8).

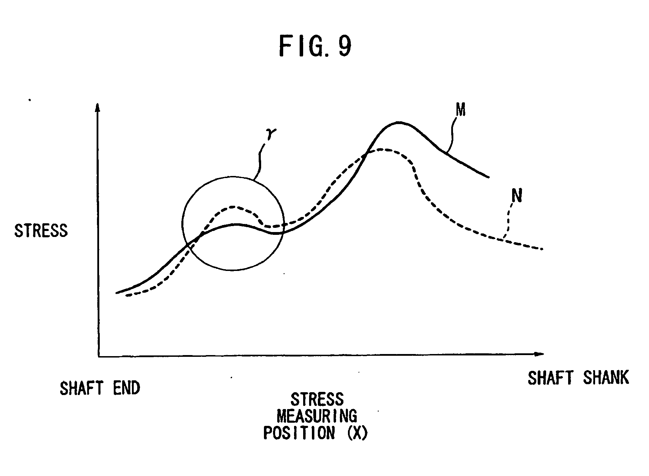

FIG. 9 shows a characteristic curve M (solid-line curve) of stresses on a shaft wherein the point P1 in the shaft tooth section 22 and the point P2 in the hub tooth section 28 are offset from each other by a predetermined distance, and a characteristic curve N (broken-line curve) of stresses on a shaft wherein the points P1, P2 are not offset from each other, i.e., the distance by which the points P1, P2 are spaced horizontally from each other is nil.

A comparison of offset and offset-free portions (see portions γ of the characteristic curves M, N) shows that the characteristic curve M of the shaft wherein the starting point P1 in the shaft tooth section and the starting point P2 in the hub tooth section are offset from each other is more gradual than the characteristic curve N wherein the starting points P1, P2 are not offset from each other. The offset starting points P1, P2 are effective in relaxing stresses in the area where the radii change.

FIGS. 2A and 2B show the manner in which the crowned peak 22a of the shaft tooth section 22 and the straight peaks 28a of the hub tooth section 28, which are held in mesh with each other, are deformed when torque is applied to them in their unloaded state. It is assumed that when torque is applied to the peaks 22a, 28a, a load is applied to them in the direction indicated by the arrow Y which is perpendicular to the axis of the crowned peak 22a.

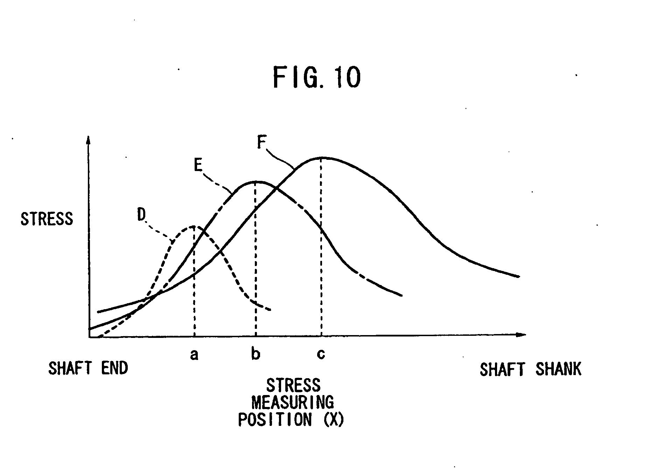

FIG. 10 shows the relationship between stresses developed on the shaft and positions where the stresses are measured (see the arrow X in FIGS. 2A and 2B). It can be seen from FIG. 10 that as the magnitude of an applied load varies, the peak point of stresses changes along the measured positions. If the magnitude of the applied load varies through three stages, i.e., a low load, a medium load, and a high load, then characteristic curves that are plotted under those loads include a low-load characteristic curve D, a medium-load characteristic curve E, and a high-load characteristic curve F, respectively.

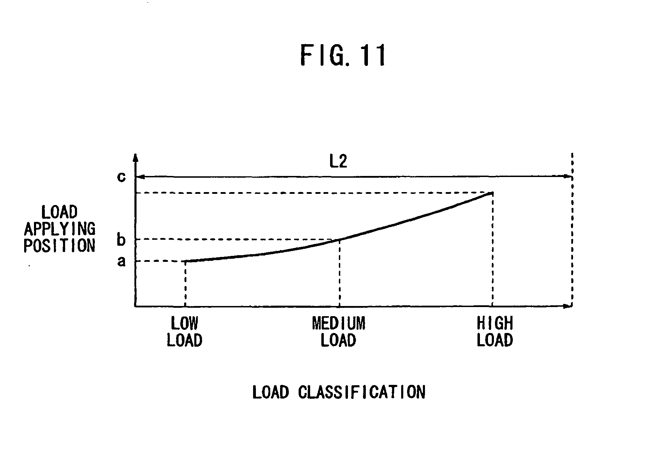

FIG. 11 shows the relationship between the classification of the applied loads, i.e., the low load, the medium load, and the high loads, and positions where the loads are applied. As can be understood from FIG. 2B, the shaft tooth section 22 and the hub tooth section 28 mesh with each other in successively changing areas, i.e., a circular area a, a circular area b, and a circular area c corresponding respectively to load-applied positions a, b, c, depending on the magnitude of the applied load. The areas in which the shaft tooth section 22 and the hub tooth section 28 mesh with each other are displaced away from the crowning top P0 toward the shaft shank 24 depending on the magnitude of the applied load.

Specifically, when the low load is applied, the circular area a serves as a major low-load transmitting area. When the medium load is applied, the circular area b which is displaced slightly from the circular area a toward the shaft shank 24 serves as a major medium-load transmitting area. When the high load is applied, the circular area c which is displaced slightly from the circular area b toward the shaft shank 24 serves as a major high-load transmitting area.

With the shaft tooth section 22 being thus crowned with the changing tooth thickness, the area where the load is transmitted (the peak point of stresses) changes depending on the magnitude of the applied load, thus relaxing the concentration of stresses on particular areas.

FIGS. 12 through 14 are enlarged partial longitudinal cross-sectional views taken along line XII - XII, line XIII - XIII, and line XIV - XIV, respectively, of FIG. 3, showing the engagement of the peak 28a of the hub tooth section 28 in the valley 22b of the shaft tooth section 22b at the time the shaft 12 and the hub 14 are assembled together. In FIGS. 12 through 14, φd1 through φd3 represent pitch circle radii from the central axis of the shaft 12.

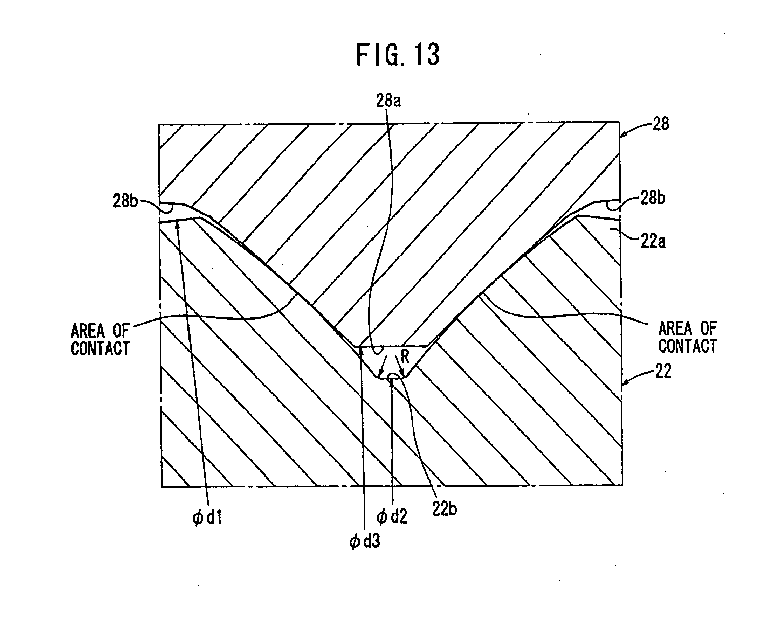

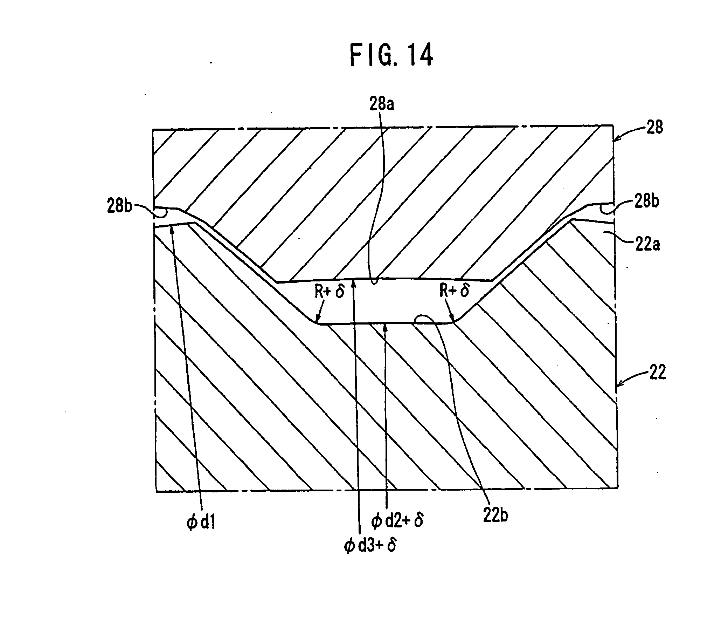

Since the shaft tooth section 22 is crowned, the peak 28a is held in contact with the surface of the valley 22b only in the vicinity of the crowning top P0 (see FIG. 13) and is held out of contact with the surface of the valley 22b in other areas (see FIGS. 12 and 14).

As the shaft tooth section 22 is of the crowned shape, the area of contact between the shaft tooth section 22 and the hub tooth section 28 is reduced, and the pressing load applied to assemble the shaft 12 and the hub 14 are assembled together is lowered to reduce stresses acting on the valley 22b of the shaft tooth section 22. Since the pressing load applied to assemble the shaft 12 and the hub 14 are assembled together is not increased, backlash between the shaft tooth section 22 and the hub tooth section 28 is suppressed.

As can be understood from a comparison between FIGS. 12 and 13 and FIG. 14, the radius of the shaft tooth section 22 in a stress concentrating region can be increased by δ by forming the first step region 30 and the second step region 32 in portions of the shaft tooth section 22 and the hub tooth section 28 which are close to the shaft shank 24.

Since the radius of the shaft tooth section 22 in the stress concentrating region is increased by δ, the radius of curvature of the bottom land R of the valley 22b of the shaft tooth section 22 can be increased for stress distribution. Overall stresses (main stresses) can be lowered by increasing the radius of the region close to the shaft shank 24 as compared with other regions.

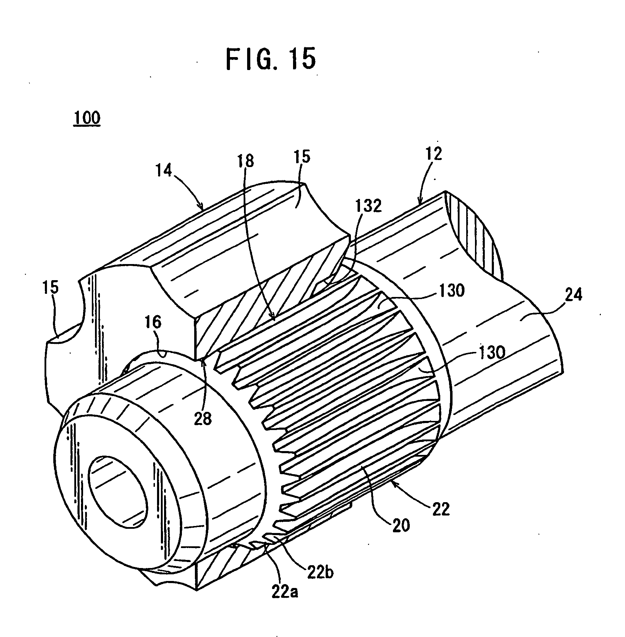

FIG. 15 shows a shaft/hub unit 100 which incorporates a power transmitting mechanism according to a second embodiment of the present invention. Those parts of the power transmitting mechanism according to the second embodiment which are identical to those of the power transmitting mechanism according to the first embodiment are denoted by identical reference characters, and will not be described in detail below.

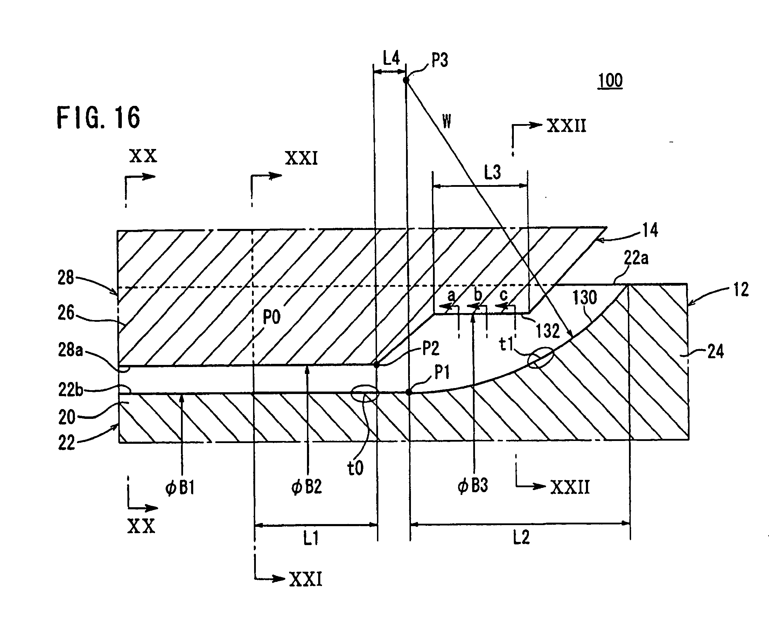

FIG. 16 shows, in enlarged partial longitudinal cross section, a peak 28a of a hub tooth section 28 which engages in a valley 22b of a shaft tooth section 22. A point P1 is established on the bottom land of the valley 22b at a position which is displaced horizontally a predetermined distance L1 toward the shaft shank 24 from a position (see the broken-line) on the bottom land of the valley 22 (valley radius φB1) in alignment with the crowning top P0. From the point P1, an arcuate region 130 extends toward the hub tooth section 28 and is joined to the shaft shank 24, the arcuate region 130 having a radius W of curvature from a center of curvature at a point P3.

The peak 22a of the shank tooth section 22 has an outside diameter which may remain constant in the axial direction, as shown in FIGS. 16 and 17, or which may progressively decrease from an area close to the point P1 toward the shaft shank 24, as shown in FIG. 5.

On the peak 28a of the hub tooth section 28, there is established a point P2 at a position which is offset a predetermined distance L4 from the point P1 in the shaft tooth section 22 in a horizontal direction away from the shaft shank 24. From the point P2, the peak 28a changes its peak radius φB2 to a peak radius φB3, providing a step region 132 with the peak radius φB3. The step region 132 extends horizontally a predetermined distance L3 toward the shaft shank 24.

The step region 132 of the hub tooth section 28, which is retracted away from the shaft tooth section 22, may have a slanted surface or an arcuate curved surface or a compound surface having a predetermined radius of curvature. The tilt angle of the step region 132 starting from the point P2 is set as desired complementarily to the tilt angle of the arcuate region 130. The shape of the hub tooth section 28 is not limited to the shape of the step region 132, but may include a round shape, a tapered tape, or the like having a predetermined radius of curvature. The valleys 28b of the hub tooth section 28 have an inside diameter which remains constant in the axial direction.

The valley radius φB1 represents a distance from the central axis of the shaft 12 to the bottom land of the valley 22b of the shaft tooth section 22. The peak radii φB2, φB3 represent respective distances from the central axis of the shaft 12 to the top lands of the peak 28a of the hub tooth section 28.

The distance L2 in the shaft tooth section 22 is set to a value greater than the distance L1 in the shaft tooth section 22 (L1 < L2), and the distance L3 in the hub tooth section 22 is set to a value smaller than the distance L2 in the shaft tooth section 22 (L2 > L3).

As can be seen from FIG. 16, the point P1 as a starting point (changing point) where the arcuate region 130 of the shaft tooth section 22 starts to rise and the point P2 as a starting point (changing point) where the step region 132 in the hub tooth section 28 starts to rise are offset substantially horizontally from each other by a predetermined distance L4.

Therefore, when torque is applied to the shaft/hub unit 10 wherein the shaft tooth section 22 and the hub tooth section 28 mesh with each other, since the point P1 in the shaft tooth section 22 and the point P2 in the hub tooth section 28 are offset from each other by the distance L4, the stresses imposed on the shaft/hub unit 100 are distributed to the points P1, P2, thereby relaxing stress concentration.

As a result, the stresses are prevented from concentrating on, but are distributed to, the shaft tooth section 22 and the hub tooth section 28, thus increasing static mechanical strength and fatigue strength of the area where the shaft tooth section 22 and the hub tooth section 28 mesh with each other.

As shown in FIG. 17, the points P1, P2 may be vertically aligned with each other without being offset from Each other (this is not however part of the present invention). With such an arrangement, the arcuate region 130 in the shaft tooth section 22 and the step region 132 in the hub tooth section 28 coact with each other in distributing the stresses applied to the arcuate region 130 and relaxing stress concentration.

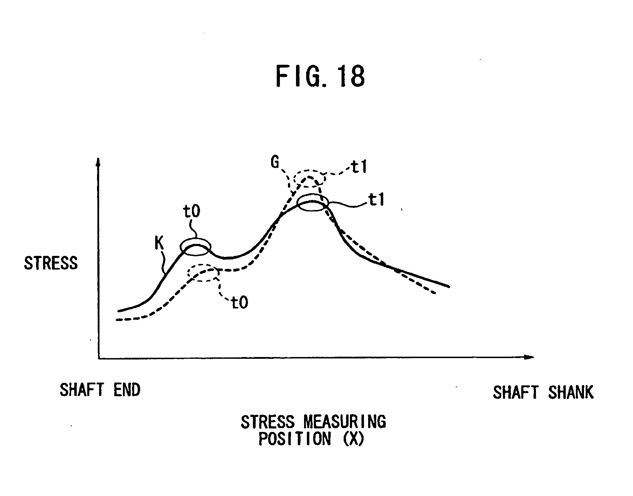

FIG. 18 shows a characteristic curve G (broken-line curve) of stresses on a comparative shaft wherein the step region 132 is not formed in the hub tooth section 28 and a characteristic curve K (solid-line curve) of stresses on a shaft wherein the points P1, P2 are offset from each other by the predetermined distance L4, the arcuate region 130 is formed in the shaft tooth section 22, and the step region 132 is formed in the hub tooth section 28, as shown in FIG. 16.

A comparison between the characteristic curve G and the characteristic curve K indicates that according to the characteristic curve K of FIG. 16, the peak of stresses is distributed to areas t0, t1, and hence is reduced in the area t1. Specifically, though the stress in the area t0 of the characteristic curve K is higher than the stress in the area t0 of the characteristic curve G, since the maximum stress in the area t1 of the characteristic curve K is lower than that of the characteristic curve G, the peak of maximum stresses produced on the shaft 12 is reduced, and the stresses are reduced in the entire measured positions.

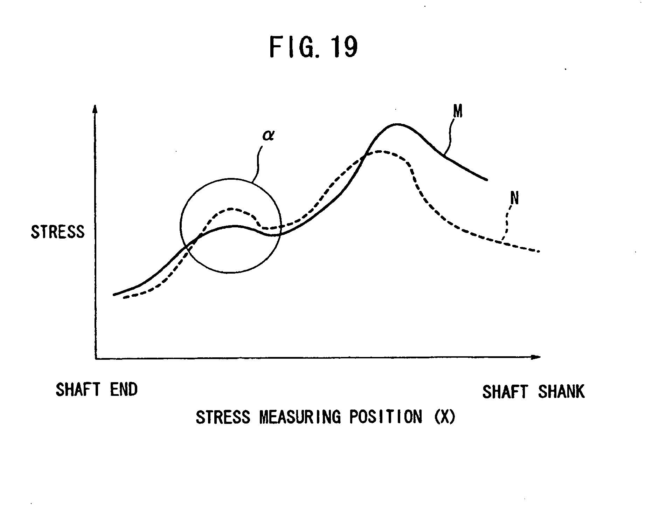

FIG. 19 shows a characteristic curve M (solid-line curve) of stresses on a shaft wherein the points P1, P2 are offset from each other by a predetermined distance and a characteristic curve N (broken-line curve) of stresses on a shaft wherein the points P1, P2 are not offset from each other, i.e., the distance by which the points P1, P2 are spaced horizontally from each other is nil.

A comparison of offset and offset-free portions (see portions α of the characteristic curves M, N of FIG. 19) shows that the characteristic curve M of the shaft wherein the starting point P1 in the shaft tooth section and the starting point P2 in the hub tooth section are offset from each other is more gradual than the characteristic curve N wherein the starting points P1, P2 are not offset from each other. The offset starting points P1, P2 are effective in relaxing stresses in the area where the radii change.

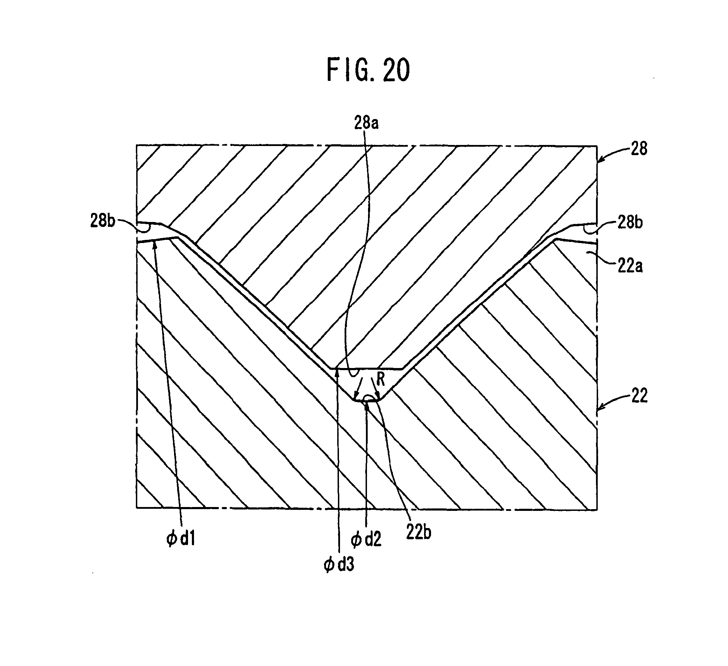

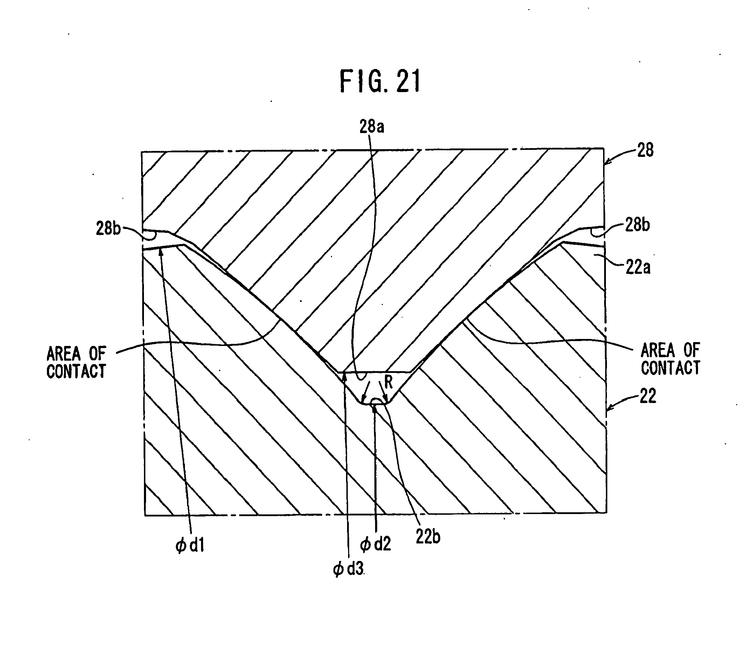

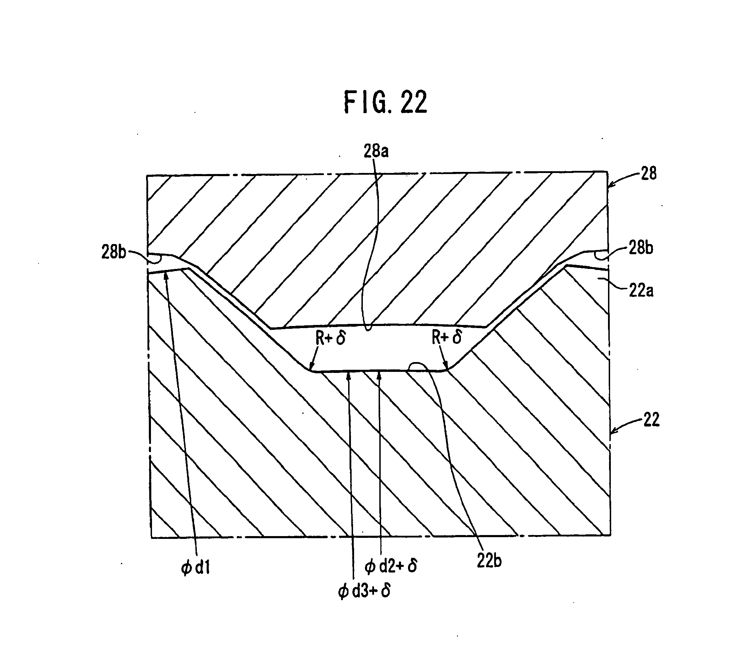

FIGS. 20 through 22 are enlarged partial longitudinal cross-sectional views taken along line XX - XX, line XXI - XXI, and line XXII - XXII, respectively, of FIG. 16, showing the engagement of the peak 28a of the hub tooth section 28 in the valley 22b of the shaft tooth section 22b at the time the shaft 12 and the hub 14 are assembled together. The operation and advantages of the shaft/hub unit 100 shown in FIGS. 20 through 22 are identical to those of the shaft/hub unit 10 shown in FIGS. 12 through 14, and will not be described in detail below.

Because of the crowned shaft tooth section 22, the load transmitting region (stress peak point) varies depending on the magnitude of the applied load as with the first embodiment, as shown in FIGS. 2A, 2B, 10 and 11.

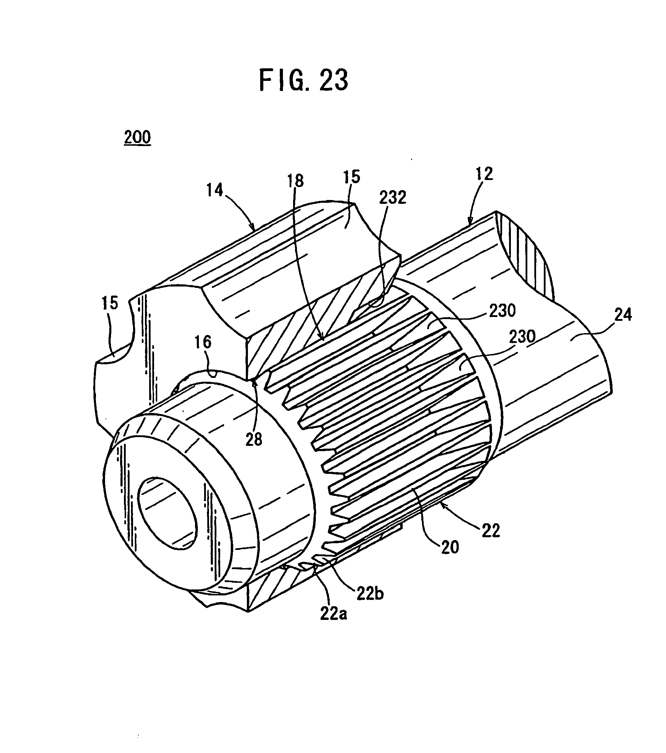

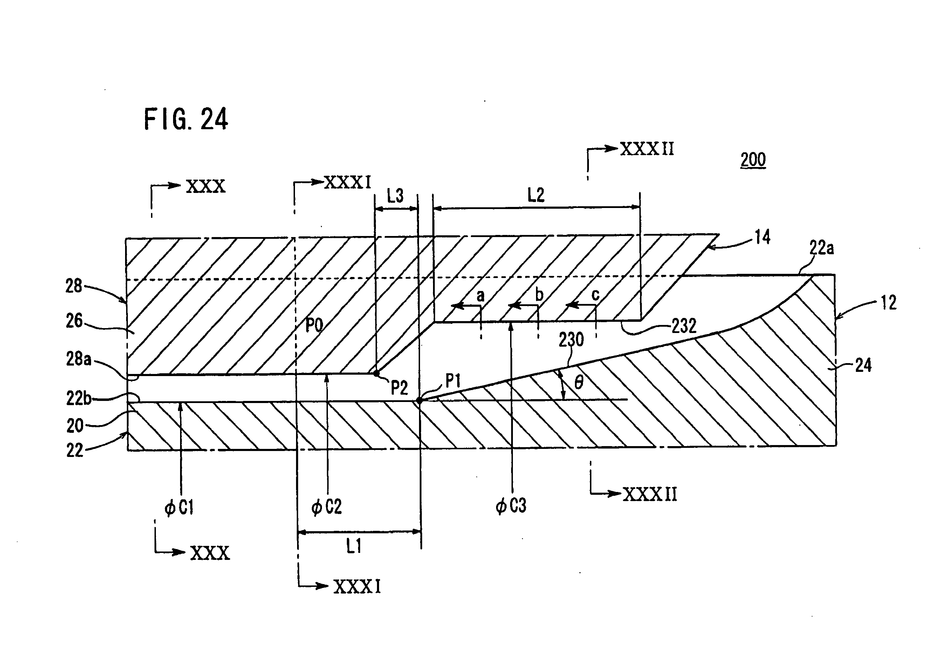

FIG. 23 shows a shaft/hub unit 200 which incorporates a power transmitting mechanism according to a third embodiment of the present invention. FIG. 24 shows, in enlarged partial longitudinal cross section, that a peak 28a of a hub tooth section 28 engages in a valley 22b of a shaft tooth section 22.

A point P1 (changing point) is established on the bottom land of the valley 22b at a position which is displaced horizontally a predetermined distance L1 toward the shaft shank 24 from a position (see the broken-line) on the bottom land of the valley 22 (valley radius φC1) in alignment with the crowning top P0. From the point P1, the radius of the bottom lane of the valley 22b is progressively increased toward the hub tooth section 28, providing a tapered region 230. The tapered region 230 extends toward and is joined to the shaft shank 24.

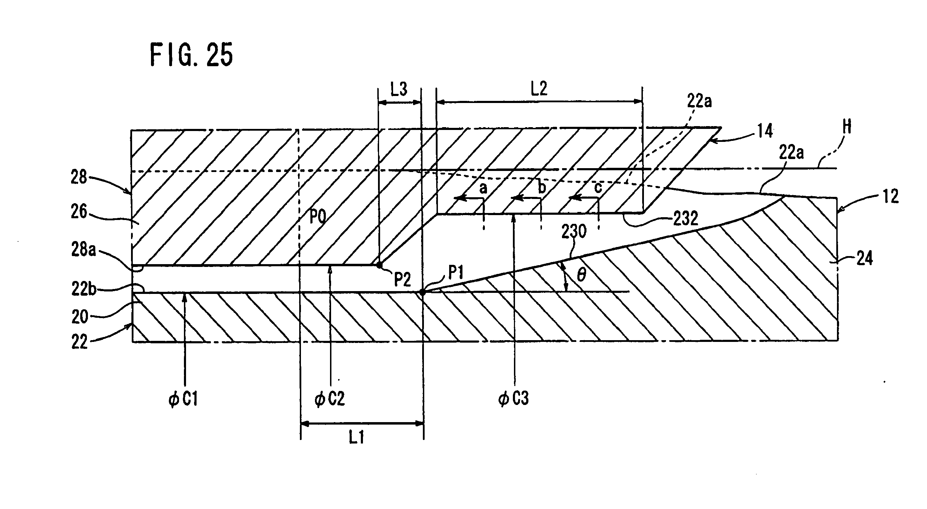

The peak 22a of the shank tooth section 22 has an outside diameter which may remain constant in the axial direction, as shown in FIG. 24, or which may progressively decrease from an area close to the point P1 toward the shaft shank 24, as shown in FIG. 25. With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 25, the reference character "H" represents a horizontal line to be compared with a change (reduction) in the outside diameter of the peak 22a.

On the peak 28a of the hub tooth section 28, there is established a point P2 at a position which is offset a predetermined distance L3 from the point P1 in the shaft tooth section 22 in a horizontal direction away from the shaft shank 24. From the point P2, the peak 28a changes its peak radius φC2 to a peak radius φC3, providing a step region 232 with the peal radius φC3. The step region 232 extends horizontally a predetermined distance L2 toward the shaft shank 24.

The step region 232 of the hub tooth section 28 may have a slanted surface or an arcuate curved surface or a compound surface having a predetermined radius of curvature. The tilt angle of the step region 232 starting from the point P2 is set as desired complementarily to the tilt angle of the tapered region 230. The shape of the hub tooth section 28 is not limited to the shape of the step region 232, but may include a round shape, a tapered tape, or the like having a predetermined radius of curvature. The valleys 28b of the hub tooth section 28 have an inside diameter which remains constant in the axial direction.

The valley radius φC1 represents a distance from the central axis of the shaft 12 to the bottom land of the valley 22b of the shaft tooth section 22. The peak radii φC2, φC3 represent respective distances from the central axis of the shaft 12 to the top lands of the peak 28a of the hub tooth section 28.

As can be seen from FIG. 24, the point P1 as a starting point where the tapered region 230 of the shaft tooth section 22 starts to rise and the point P2 as a starting point where the step region 232 in the hub tooth section 28 starts to rise are offset substantially horizontally from each other by a predetermined distance L3.

Therefore, when torque is applied to the shaft/hub unit 200 wherein the shaft tooth section 22 and the hub tooth section 28 mesh with each other, since the point P1 in the shaft tooth section 22 and the point P2 in the hub tooth section 28 are offset from each other by the distance L3, the stresses imposed on the shaft/hub unit 200 are distributed to the points P1, P2, thereby relaxing stress concentration.

As a result, since the concentration of stresses is relaxed, but stresses are distributed, static mechanical strength and fatigue strength of the area where the shaft tooth section 22 and the hub tooth section 28 mesh with each other are increased.

By making the rise angle θ of the tapered region 230 smaller, the area of the tapered region 230 as a stress acting surface can be increased for more stress relaxation.

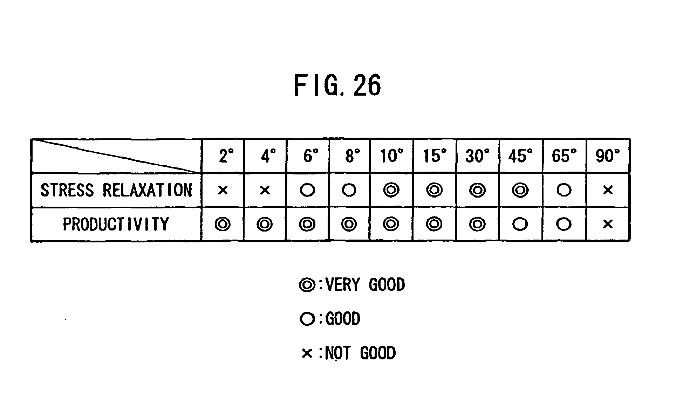

The relationship between the rise angle θ of the tapered region 230, stress relaxation, and productivity is shown in FIG. 26. It can be seen from FIG. 26 that stress relaxation and productivity are good (see symbol "O") if the rise angle 8 is set to a value in the range from 6 degrees to 65 degrees, and optimum (see symbol "⊚") if the rise angle θ is set to a value in the range from 10 degrees to 30 degrees.

If the rise angle θ is set to 4 degrees, no sufficient stress distribution capability is available. If the rise angle θ is set to 65 degrees, an inexpensive rolling process using rolling racks, to be described later, cannot be employed, and productivity is lowered.

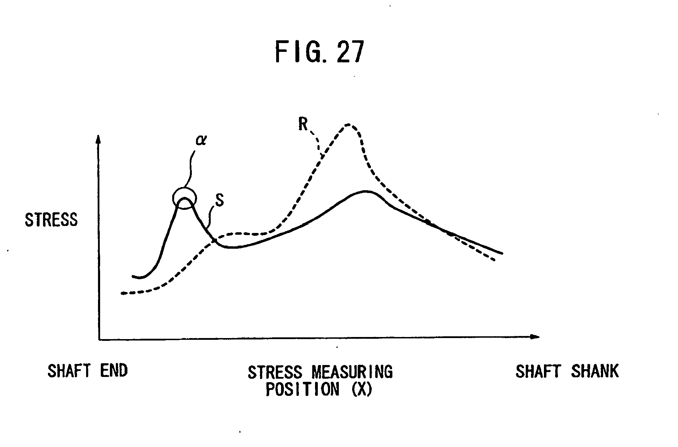

FIG. 27 shows a characteristic curve R (broken-line curve) of stresses on a comparative shaft wherein the tapered region 230 and the step region 232 are not formed in the shaft tooth section 22 and the hub tooth section 28 and a characteristic curve S (solid-line curve) of stresses on a shaft wherein the points P1, P2 are not offset from each other, but vertically aligned with each other and the step region 232 is formed.

It can be seen from FIG. 27 that according to the characteristic curve S representing the shaft wherein the points P1, P2 are not offset from each other, the peak of stresses is lower and the concentration of stresses is less intensive than according to the characteristic curve R representing the comparative shaft, but more stresses concentrate on an area where the points P1, P2 are vertically aligned with each other (see a portion α in FIG. 27).

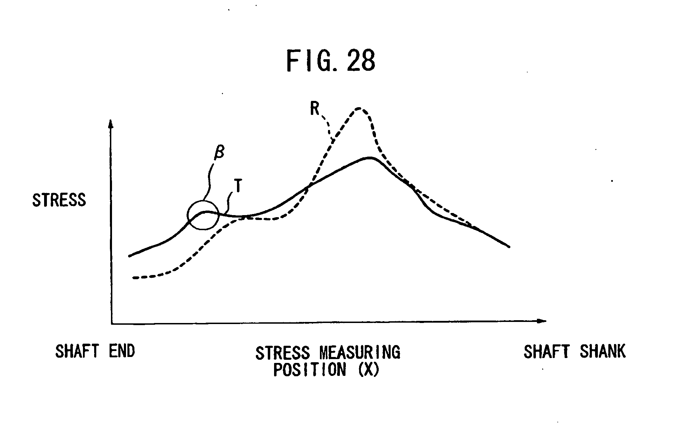

In FIG. 28, a characteristic curve T (solid-line curve) represents stresses on the shaft having the structure shown in FIG. 24 wherein the tapered region 230 and the step region 232 are formed respectively in the shaft tooth section 22 and the hub tooth section 28, and the P1 as a starting point of the tapered region 230 and the point P2 as a starting point of the step region 232 are offset from each other horizontally by a predetermined distance L3. It can be understood from FIG. 28 that according to the characteristic curve T, stresses in the area where the points P1, P2 are offset from each other (see a portion β in FIG. 28) are less intensive than according to the characteristic curve S (see FIG. 27) representing the structure wherein the points P1, P2 are not offset from each other (based on a comparison between the portion α in FIG. 27 and the portion β in FIG. 28).

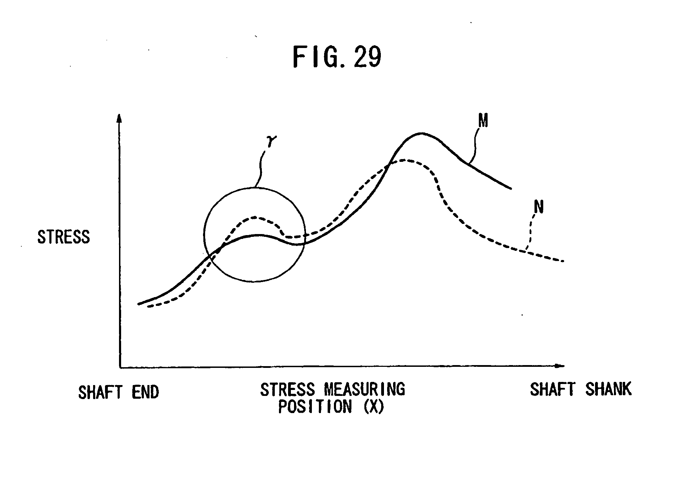

FIG. 29 shows a characteristic curve M (solid-line curve) of stresses on a shaft wherein the point P1 in the shaft tooth section 22 and the point P2 in the hub tooth section 28 are offset from each other by a predetermined distance, and a characteristic curve N (broken-line curve) of stresses on a shaft wherein the points P1, P2 are not offset from each other, i.e., the distance by which the points P1, P2 are spaced horizontally from each other is nil.

A comparison of offset and offset-free portions (see portions γ in FIG. 29) shows that the characteristic curve M of the shaft wherein the starting point P1 in the shaft tooth section and the starting point P2 in the hub tooth section are offset from each other is more gradual than the characteristic curve N wherein the starting points P1, P2 are not offset from each other. The offset starting points P1, P2 are effective in relaxing stresses in the area where the radii change.

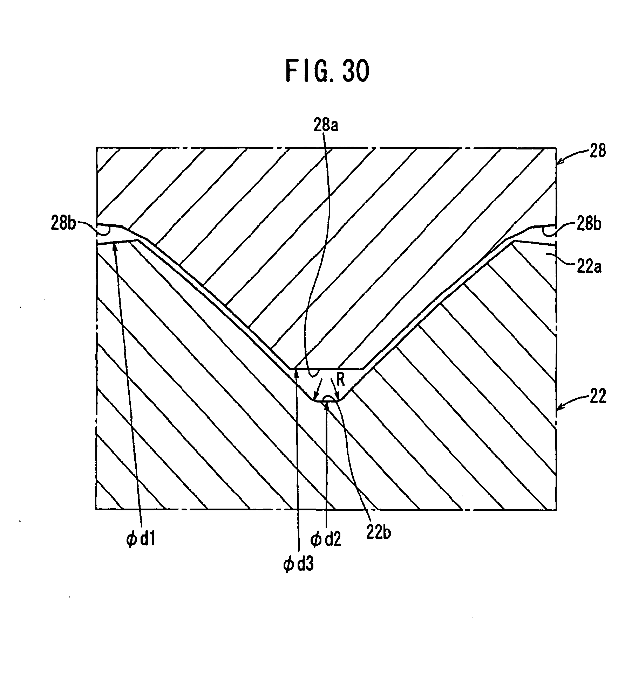

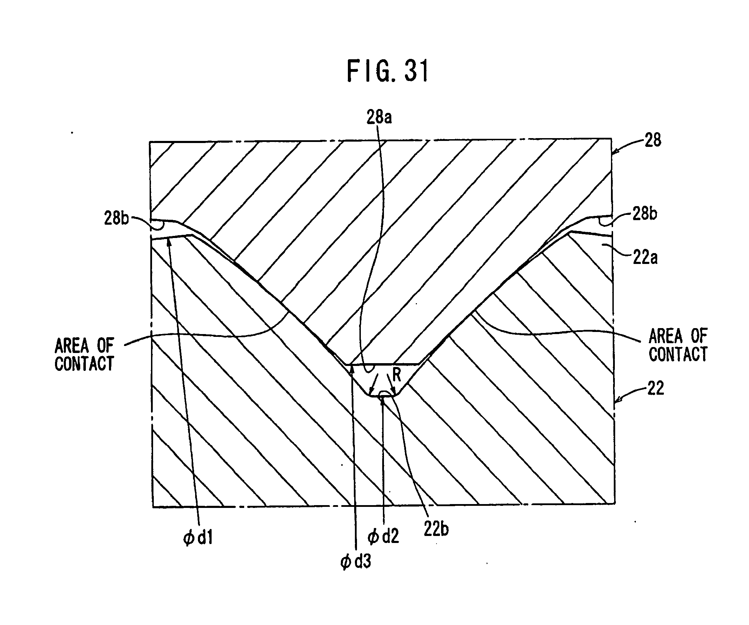

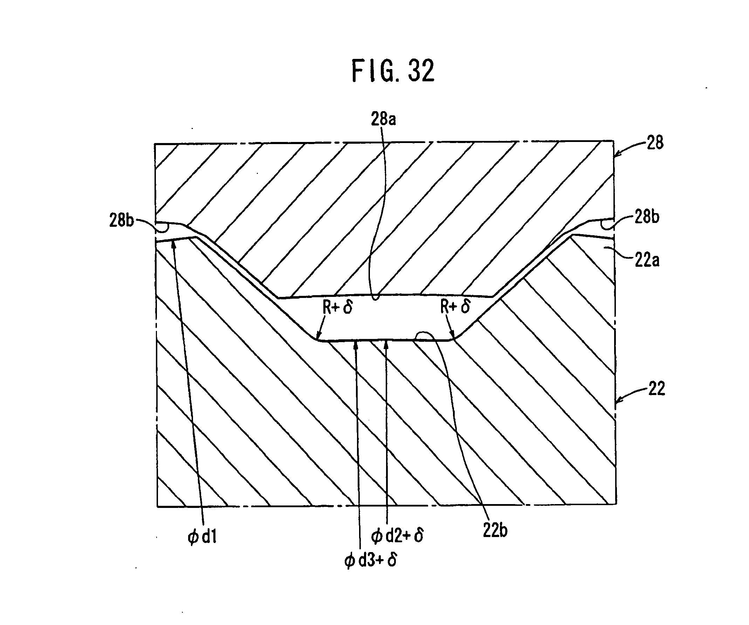

FIGS. 30 through 32 are enlarged partial longitudinal cross-sectional views taken along line XXX - XXX, line XXXI - XXXI, and line XXXII - XXXII, respectively, of FIG. 24, showing the engagement of the peak 28a of the hub tooth section 28 in the valley 22b of the shaft tooth section 22 at the time the shaft 12 and the hub 14 are assembled together. The operation and advantages of the shaft/hub unit 200 shown in FIGS. 30 through 32 are identical to those of the shaft/hub unit 10 shown in FIGS. 12 through 14, and will not be described in detail below.

Because of the crowned shaft tooth section 22, the load transmitting region (stress peak point) varies depending on the magnitude of the applied load as with the first embodiment, as shown in FIGS. 2A, 2B, 10 and 11.

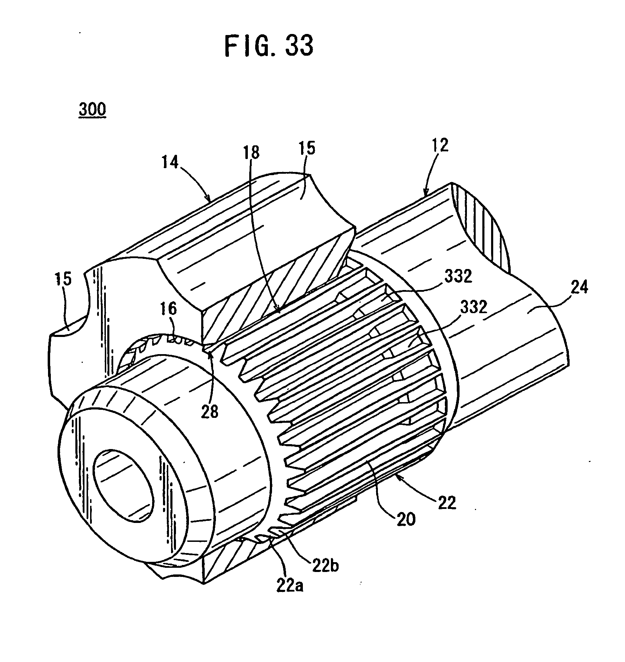

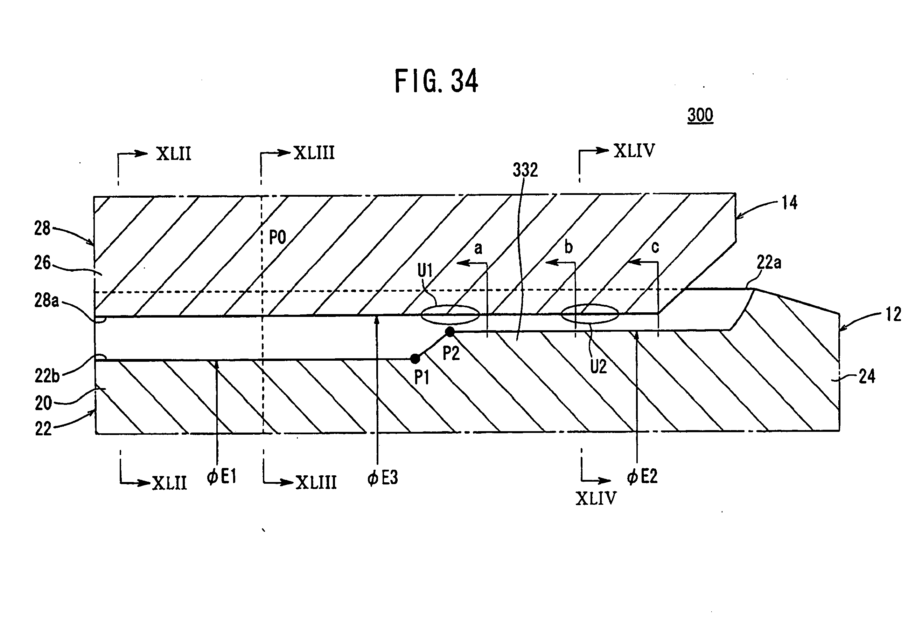

FIG. 33 shows a shaft/hub unit 300 which incorporates a power transmitting mechanism according to a fourth embodiment of the present invention. FIG. 34 shows, in enlarged partial longitudinal cross section, that a peak 28a of a hub tooth section 28 engages in a valley 22b of a shaft tooth section 22.

As shown in FIG. 34, the valley 22b of the shaft tooth section 22 has a step region 332 extending horizontally a predetermined distance toward the shaft shank 24 and raised from a point P1 toward the hub tooth section 28 obliquely at a predetermined angle. The step region 332 extends horizontally a predetermined distance from a starting point P2 and is joined to the shaft shank 24. Stated otherwise, the radius of the shaft tooth section 22 changes from a valley radius φE1 at the valley 22b to a valley radius φE2 at the step region 332.

The step region 332 may have a slanted surface or an arcuate curved surface or a compound surface having a predetermined radius of curvature.

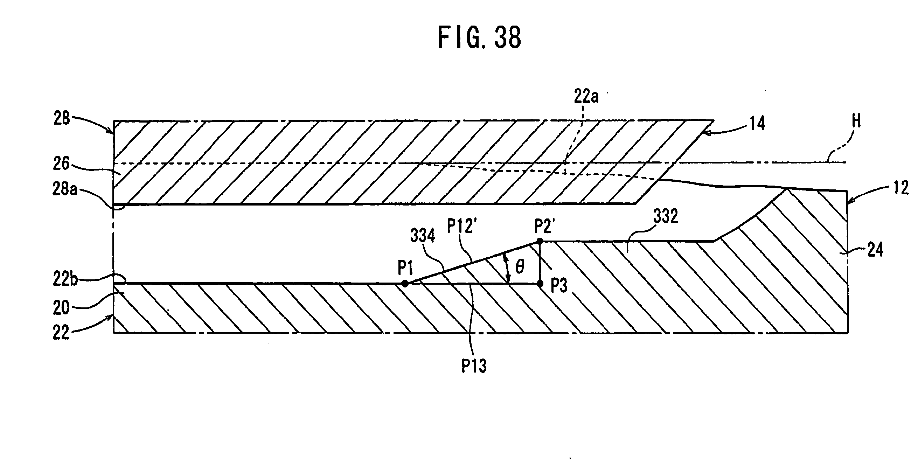

The peak 22a of the shank tooth section 22 has an outside diameter which may remain constant in the axial direction, as shown in FIGS. 34 through 37, or which may progressively decrease from an area close to the point P1 toward the shaft shank 24, as shown in FIG. 38. With the outside diameter of the peak 22a progressively decreasing toward the shaft shank 24, the shaft tooth section 22 can easily be manufactured by rolling racks, as described later on, and the function of the shaft tooth section 22 to transmit torque is not lowered. In FIG. 38, the reference character "H" represents a horizontal line to be compared with a change (reduction) in the outside diameter of the peak 22a.

As with the case of the peak 30a, the peak 28a of the hub tooth section 28 has its outside radius φE3 remaining constant in the axial direction of the hub 14, and the valley 28b of the hub tooth section 28 also has its inside radius remaining constant in the axial direction of the hub 14.

Therefore, when torque is applied to the shaft/hub unit 300 wherein the shaft tooth section 22 and the hub tooth section 28 mesh with each other, stresses applied to the shaft/hub unit 300 are distributed to an area U1 of the hub tooth section 28 which faces the point P1 in the shaft tooth section 22 and an area U2 of the hub tooth section 28 which faces the step region 332 of the shaft tooth section 22, so that the concentration of stresses is relaxed (see FIG. 34).

As a result, since the concentration of stresses is relaxed, but stresses are distributed, static mechanical strength and fatigue strength of the area where the shaft tooth section 22 and the hub tooth section 28 mesh with each other are increased.

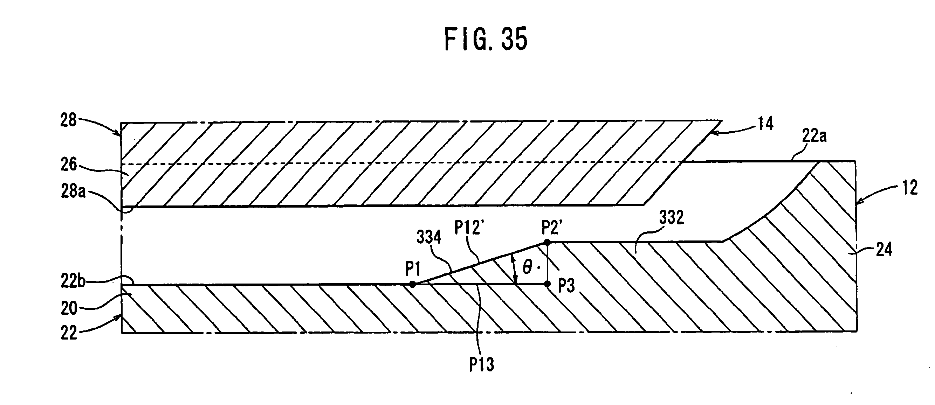

In FIG. 35, a right-angled triangle formed by interconnecting points P1, P2', P3 in the valley 22b of the shaft tooth section 22 may have its cross-sectional area increased, and the angle θ formed between a line segment P13 interconnecting the points P1, P3 and a line segment P12' interconnecting the points P1, P2', i.e., the tilt angle θ of the step region 332, may be set to a small value for further relaxing stress concentration with a first tapered region 334 of the step region 332.

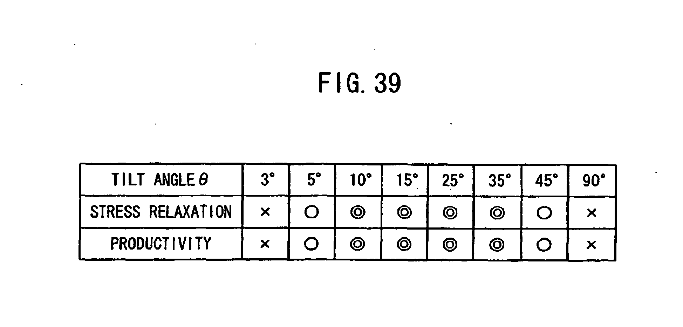

The relationship between the tilt angle θ of the step region 332, stress relaxation, and productivity is shown in FIG. 39. It can be seen from FIG. 39 that stress relaxation and productivity are good (see symbol "O") if the tilt angle θ is set to a value in the range from 5 degrees to 45 degrees, and optimum (see symbol "⊚") if the tilt angle θ is set to a value in the range from 10 degrees to 35 degrees.

If the tilt angle θ is set to 3 degrees, no sufficient stress distribution capability is available, and it is difficult to manufacture the shaft tooth section 22 with rolling racks, to be described later. If the tilt angle θ is set to 90 degrees, excessive stresses concentrate on the first step region 332, and the durability of rolling racks used to manufacture the shaft tooth section 22 is reduced.

An ordinary shaft/hub spline fitting arrangement which is free of the step region 332 has a stress peak point produced in the vicinity of the shaft shank. According to the fourth embodiment, however, the step region 332 is provided in the shaft tooth section 22 to allow some stresses to concentrate on the hub tooth section 28 facing the point P1, thus distributing stresses that tend to concentrate on the shaft shank 24. If the tilt angle θ of the step region 332 in the shaft tooth section 22 is set to too a large value, e.g., 90 degrees, for example, then excessive stresses concentrate on the hub tooth section 28 facing the point P1, failing to provide a stress distributing (stress relaxing) capability. By setting the tilt angle θ, i.e., the rise angle, of the step region 332 to an appropriate value, the concentration of stresses in the vicinity of the shaft shank 24 is suitably distributed to reduce stresses at the peak point.

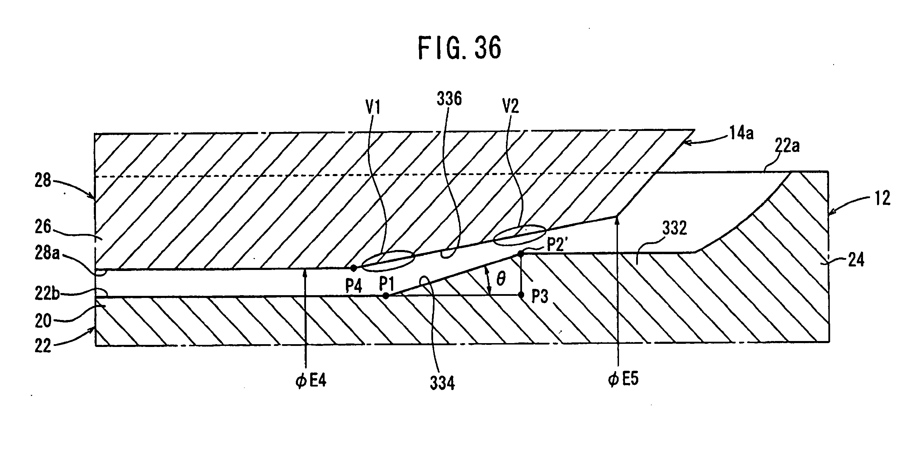

As shown in FIG. 36, in a hub 14a engaging the shaft tooth section 22, a point P4 may be established as a rising point on the peak 28a of the horizontally extending hub tooth section 28, and a second tapered region 336 may be formed as extending from the point P4 toward the shaft shank 24 obliquely at a predetermined angle. The second tapered region 336 is formed so as to face the point P1 as a starting point of the step region 332 in the shaft tooth section 22 and the first tapered region 334 therein, and has its radius increasing from a valley radius φE4 to a valley radius φE5 in a direction away from the shaft tooth section 22.

The point P1 as a starting point of the step region 332 in the shaft tooth section 22 and the point P4 as a starting point of the second tapered region 336 in the hub tooth section 28 may be offset from each other by a predetermined distance in the axial direction of the shaft 12, or the points P1, P4 may be aligned with each other. With such an arrangement, the step region 332 in the shaft tooth section 22 and the second tapered region 336 in the hub tooth section 28 coact with each other in distributing the stresses applied to the second tapered region 336 and relaxing stress concentration.

Therefore, when torque is applied to the shaft/hub unit 300 wherein the shaft tooth section 22 and the hub tooth section 28 mesh with each other, the stresses imposed on the shaft/hub unit 300 are distributed by the second tapered region 336 to an area V1 of the hub tooth section 28 which faces the point P1 in the shaft tooth section 22 and an area V2 of the hub tooth section 28 which faces the point P2 in the shaft tooth section 22, so that the concentration of stresses is relaxed and the peak of stresses is reduced (see FIG. 36). As a result, the first tapered region 334 in the hub tooth section 28 is effective in increasing static mechanical strength and fatigue strength of the area where the shaft tooth section 22 and the hub tooth section 28 mesh with each other.

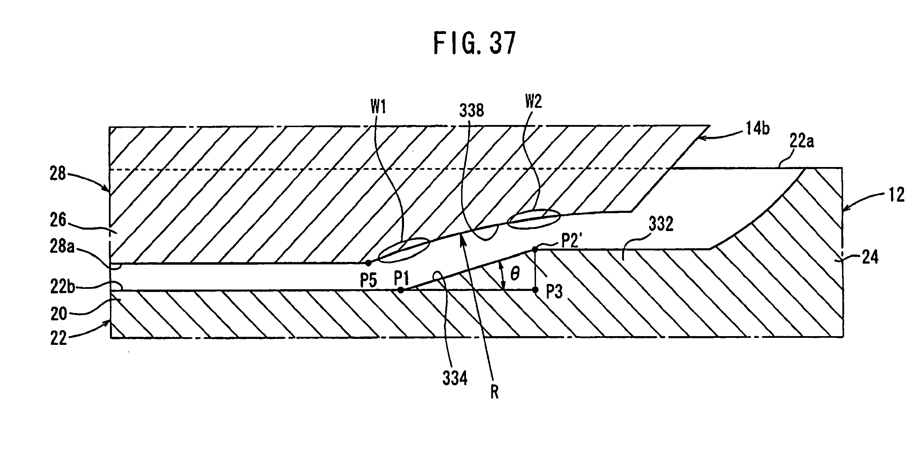

As shown in FIG. 37, in a hub 14b engaging the shaft tooth section 22, a point P5 may be established as a rising point on the peak 28a of the horizontally extending hub tooth section 28, and an arcuate region 338 having a predetermined radius of curvature may be formed as extending from the point P5 toward the shaft shank 24. The arcuate region 338 is formed so as to face the point P1 as a starting point of the step region 332 in the shaft tooth section 22 and the first tapered region 334 therein, and is retracted away from the shaft tooth section 22.

The point P1 as a starting point of the step region 332 in the shaft tooth section 22 and the point P5 as a starting point of the arcuate region 338 in the hub tooth section 28 may be offset from each other by a predetermined distance in the axial direction of the shaft 12. With such an arrangement, the step region 332 in the shaft tooth section 22 and the arcuate region 338 in the hub tooth section 28 coact with each other in distributing the stresses applied to the arcuate region 338 and relaxing stress concentration.

Therefore, when torque is applied to the shaft/hub unit 300 wherein the shaft tooth section 22 and the hub tooth section 28 mesh with each other, the stresses imposed on the shaft/hub unit 300 are distributed by the arcuate region 338 to an area W1 of the hub tooth section 28 which faces the point P1 in the shaft tooth section 22 and an area W2 of the hub tooth section 28 which faces the point P2' in the shaft tooth section 22, so that the concentration of stresses is relaxed and the peak of stresses is reduced (see FIG. 37). As a result, the arcuate region 338 in the hub tooth section 28 is effective in increasing static mechanical strength and fatigue strength of the area where the shaft tooth section 22 and the hub tooth section 28 mesh with each other.

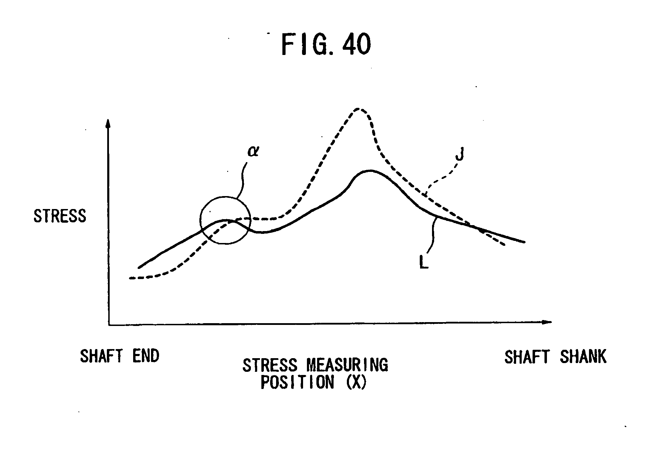

FIG. 40 shows a characteristic curve J (broken-line curve) of stresses on a comparative shaft wherein the step region 332 is not formed in the shaft tooth section 22 and a characteristic curve L (solid-line curve) of stresses on a shaft wherein the step region 332 starting from the starting point P1 is formed in the shaft tooth section 22. A comparison between the characteristic curve J and the characteristic curve L indicates that according to the characteristic curve L which represents the structure having the step region 332, the peak of stresses is reduced and the concentration of stresses is relaxed.

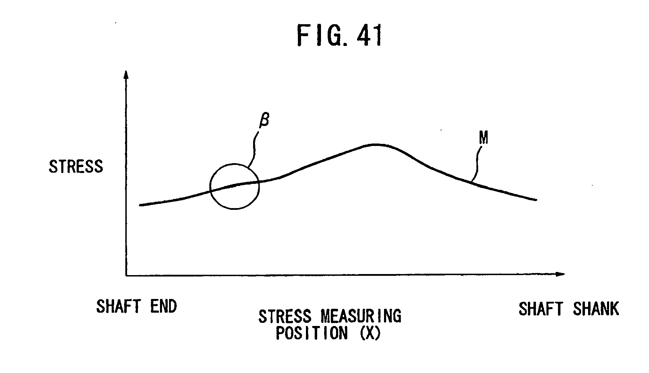

FIG. 41 shows a characteristic curve M of stresses on a shaft wherein the tilt angle θ of the step region 332 is smaller than with the characteristic curve L. It can be understood from FIG. 41 that the first tapered region 334 with the smaller tilt angle θ is effective in more stress relaxation (compare a portion α of the characteristic curve L shown in FIG. 40 and a portion β of the characteristic curve M shown in FIG. 41).

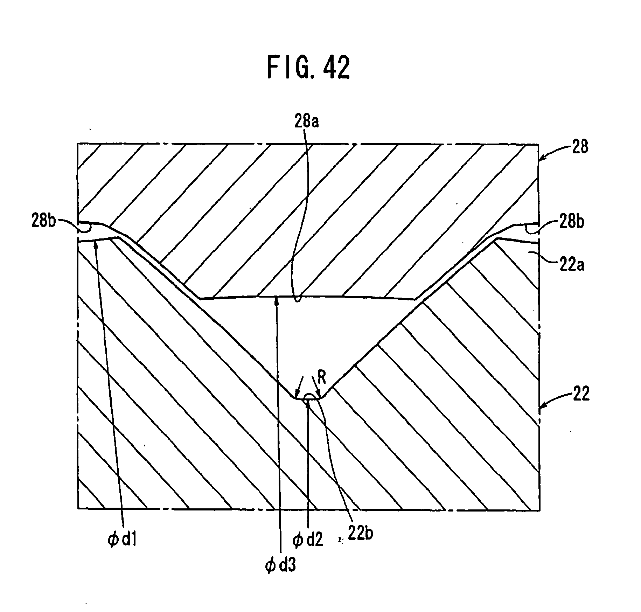

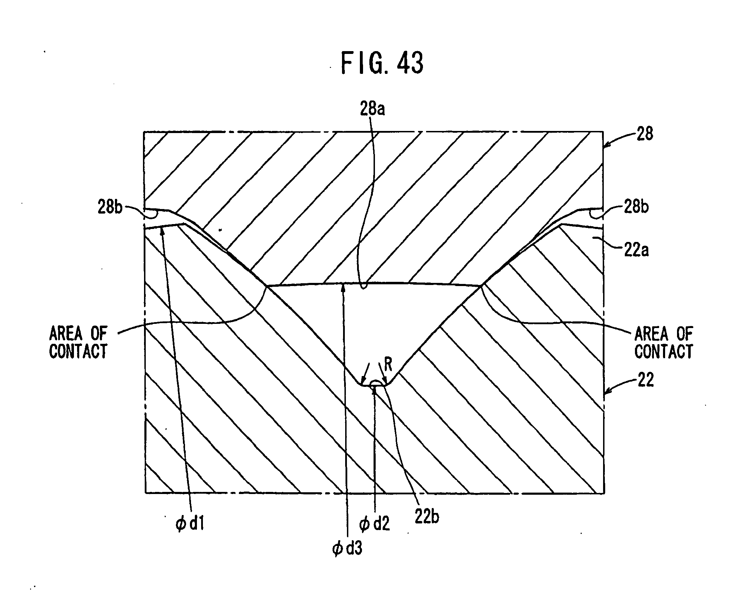

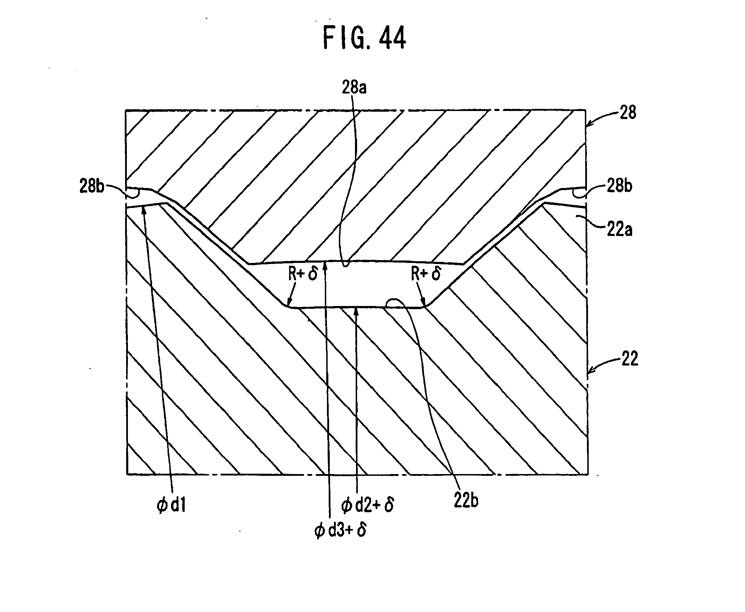

FIGS. 42 through 44 are enlarged partial longitudinal cross-sectional views taken along line XLII - XLII, line XLIII - XLIII, and line XLIV - XLIV, respectively, of FIG. 34, showing the engagement of the peak 28a of the hub tooth section 28 in the valley 22b of the shaft tooth section 22 at the time the shaft 12 and the hub 14 are assembled together. The operation and advantages of the shaft/hub unit 300 shown in FIGS. 42 through 44 are identical to those of the shaft/hub unit 10 shown in FIGS. 12 through 14, and will not be described in detail below.

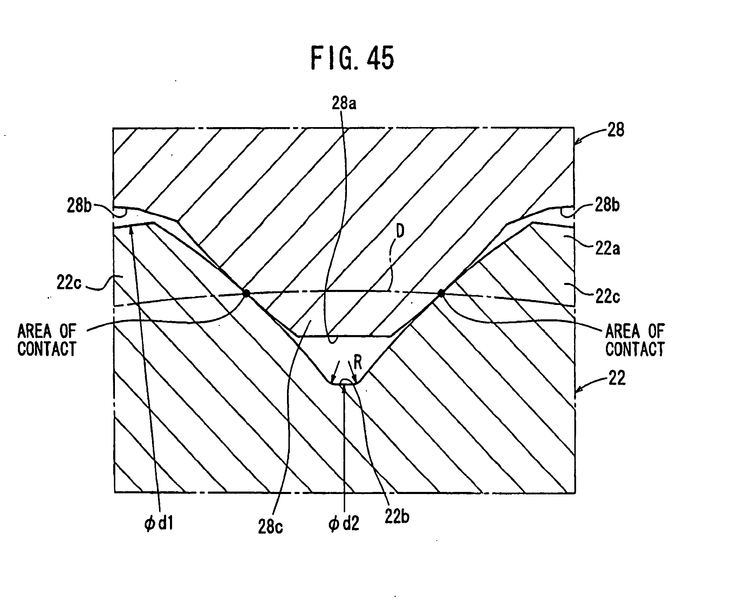

The shaft tooth section 22 and the hub tooth section 28 shown in FIGS. 42 through 44 may be of an involute shape as shown in FIG. 45. In FIG. 45, shaft teeth 22c of the shaft tooth section 22 and hub teeth 28c of the hub tooth section 28 contact each other on a reference pitch circle diameter D. Therefore, the shaft 12 and the hub 14 can easily be machined into the shaft tooth section 22 and the hub tooth section 28, respectively, by rack-shaped tools, and the shaft tooth section 22 and the hub tooth section 28 can smoothly be brought into meshing engagement with each other.

Because of the crowned shaft tooth section 22, the load transmitting region (stress peak point) varies depending on the magnitude of the applied load as with the first embodiment, as shown in FIGS. 2A, 2B, 10 and 11.

A process of manufacturing the spline teeth 20 of the shaft tooth section 22 will be described below.

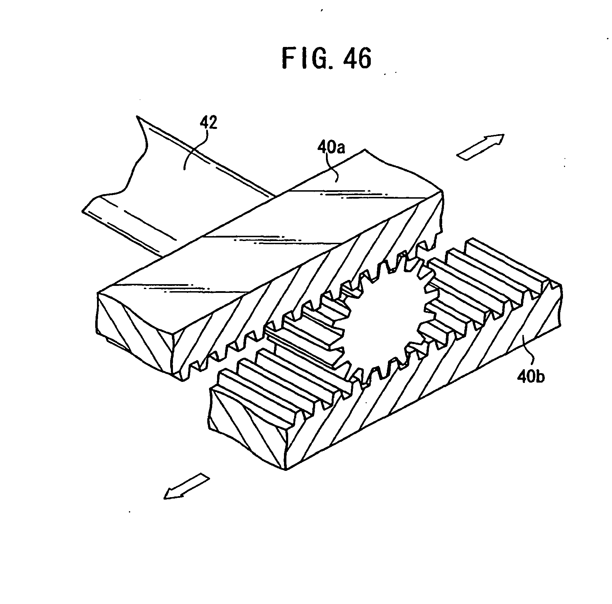

As shown in FIG. 46, a rod-shaped workpiece 42 which has been machined into a predetermined shape by a tool in a previous machining process is inserted between upper and lower rolling racks 40a, 40b each made of a hard material and having a substantially rectangular shape. While the rolling racks 40a, 40b are being pressed against the workpiece 42, the rolling racks 40a, 40b are displaced in opposite directions indicated by the arrows by an actuator (not shown) to form crowned splines on the outer circumferential surface of the workpiece 42.

The crowned spline teeth 20 of the shaft tooth section 22 can thus easily be formed by the above rolling process. Tool grooves (tool marks) having a depth of about 50 µm are formed in the top lands of the spline teeth 20 of the shaft tooth section 22 by the tool in the previous machining process.

The rolling process can form the spline teeth 20 in shorter cycles and allows the rolling racks 40a, 40b to have a longer service life than a pressing process (forging process). According to the rolling process, the forming teeth of the rolling racks 40a, 40b can be polished again for reuse. The rolling process is more advantageous as to cost from the standpoints of service life, forming cycle, and rack reusability than the pressing process (forging process).

However, since the spline teeth are formed by a material flow toward the top lands thereof in the rolling process, the top lands of the spline teeth formed by the rolling process may not necessarily be uniform in shape.

## Claims

1. A mechanism for transmitting torque between a shaft (12) and a hub (14) disposed around the shaft (12) while holding a shaft tooth section (22) formed on the shaft (12) and a hub tooth section (28) formed on the hub (14) in engagement with each other, wherein
said shaft tooth section (22) has a peak (22a) and a valley (22b) having an outside diameter varying from an end thereof toward a shaft shank (24) of the shaft (12); and
said hub tooth section (28) has a straight peak (28a) having a constant tooth thickness and having an inside diameter varying from an end thereof toward said shaft shank (24) and a valley (28b) having a constant inside diameter in the axial direction of the shaft (12),
**characterized in that**
the peak (22a) of the shaft tooth section (22) forms a crowned peak (22a) having a varying tooth thickness; and
that a first changing point (P1) of the outside diameter of the valley (22b) of said shaft tooth section (22) and a second changing point (P2) of the inside diameter of the peak (28a) of said hub tooth section (28) are set in respective positions which are offset from each other in the axial direction of the shaft (12) by a predetermined distance (L4).

2. A mechanism according to claim 1, wherein said valley (22b) of said shaft tooth section (22) has a first step region (30) raised toward said hub tooth section (28), and said peak (28a) of said hub tooth section (28) has a second step region (32) retracted away from said shaft tooth section (22), and wherein the first changing point (P1) forms a starting point (P1) of said first step region (30) and the second changing point (P2) forms a starting point (P2) of said second step region (32).

3. A mechanism according to claim 2, wherein said first step region (30) of said shaft tooth section (22) has a tilt angle (θ) set to a value ranging from 5 degrees to 45 degrees.

4. A mechanism according to claim 1, wherein different main load transmitting regions are provided depending on the magnitude of a load applied to an area where said shaft tooth section (22) and said hub tooth section (28) mesh with each other.

5. A mechanism according to claim 4, wherein the magnitude of the load selectively represents a low load, a medium load, and a high load, and said main load transmitting regions (a, b, c) for transmitting the low load, the medium load, and the high load, respectively, are established successively in a direction from a crowning top (P0) of crowned peak (22a) toward said shaft shank (24).

6. A mechanism according to claim 1, wherein said valley (22b) of said shaft tooth section (22) has an arcuate region (130) having a predetermined radius of curvature and extending toward said hub tooth section (28), and said peak (28a) of said hub tooth section (28) has a step region (132) facing said arcuate region (130) and retracted away from said shaft tooth section (22).

7. A mechanism according to claim 6, wherein a starting point (P1) of said arcuate region (130) joined to the valley (22b) of said shaft tooth section (22) and a starting point (P2) of said step region (132) joined to the peak (28a) of said hub tooth section (28) are set in respective positions which are offset from each other by a predetermined distance.

8. A mechanism according to claim 1, wherein said valley (22b) of said shaft tooth section (22) has a tapered region (230) having a diameter progressively increasing toward said hub tooth section (28), and said peak (28a) of said hub tooth section (28) has a step region (232) facing said tapered region (230) and retracted away from said shaft tooth section (22).

9. A mechanism according to claim 8, wherein a starting point (P1) of said tapered region (230) and a starting point (P2) of said step region (232) are set in respective positions which are offset from each other by a predetermined distance.

10. A mechanism according to claim 8, wherein said tapered region (230) of said shaft tooth section (22) has a rise angle (θ) set to a value ranging from 6 degrees to 65 degrees.

11. A mechanism according to claim 1, wherein said peak (28a) of said hub tooth section (28) has a tapered region (336) having a diameter progressively increasing away from said shaft tooth section (22).

12. A mechanism according to claim 1, wherein said peak (28a) of said hub tooth section (28) has an arcuate region (338) having a predetermined radius of curvature and retracted away from said shaft tooth section (22).

13. A mechanism according to claim 1, wherein said peak (22a) of said shaft tooth section (22) has an outside diameter which is constant in the axial direction of said shaft (12).

14. A mechanism according to claim 1, wherein said peak (22a) of said shaft tooth section (22) has an outside diameter which varies in the axial direction of said shaft (12).

15. A mechanism according to claim 14, wherein said peak (22a) of said shaft tooth section (22) has an outside diameter which gradually decreases toward said shaft shank (24).

16. A mechanism according to claim 1, wherein different main load transmitting regions (a, b, c) are provided depending on the magnitude of a load applied to an area where said shaft tooth section (22) and said hub tooth section (28) mesh with each other.

17. A mechanism according to claim 16, wherein the magnitude of the load selectively represents a low load, a medium load, and a high load, and said main load transmitting regions (a, b, c) for transmitting the low load, the medium load, and the high load, respectively, are established successively in a direction from a crowning top (P0) of crowned peak (22a) toward said shaft shank (24).

## Patentansprüche

1. Mechanismus zur Drehmomentübertragung zwischen einer Welle (12) und einer um die Welle (12) herum angeordneten Nabe (14), während ein an der Welle (12) ausgebildeter Wellenverzahnungsabschnitt (22) und ein an der Nabe (14) ausgebildeter Nabenverzahnungsabschnitt (28) miteinander in Eingriff gehalten werden, wobei der Wellenverzahnungsabschnitt (22) eine Spitze (22a) und ein Tal (22b) aufweist, dessen Außendurchmesser von seinem Ende zu einem Wellenschaft (24) der Welle (12) hin variiert; und
der Nabenverzahnungsabschnitt (28) eine gerade Spitze (28a) mit konstanter Zahndicke und mit einem Innendurchmesser aufweist, der von seinem einen Ende zu dem Wellenschaft (24) hin variiert, sowie ein Tal (28b) mit einem konstanten Innendurchmesser in der Achsrichtung der Welle (12),
**dadurch gekennzeichnet, dass** die Spitze (22a) des Schaftverzahnungsabschnitts (22) eine ballige Spitze (22a) mit veränderlicher Zahndicke bildet; und
dass ein erster Änderungspunkt (P1) des Außendurchmessers des Tals (22b) des Wellenverzahnungsabschnitts (22) und ein zweiter Änderungspunkt (P2) des Innendurchmessers der Spitze (28a) des Nabenverzahnungsabschnitts (28) in jeweilige Positionen gelegt sind, die in der Achsrichtung der Welle (12) um einen vorbestimmten Abstand (L4) voneinander versetzt sind.

2. Mechanismus nach Anspruch 1, wobei das Tal (22b) des Wellenverzahnungsabschnitts (22) einen ersten Stufenabschnitt (30) aufweist, der zu dem Nabenverzahnungsabschnitt (28) hin erhöht ist, und die Spitze (28a) des Nabenverzahnungsabschnitts (28) einen zweiten Stufenabschnitt (32) aufweist, der von dem Wellenverzahnungsabschnitt (22) weg eingezogen ist, und wobei der erste Änderungspunkt (P1) einen Ausgangspunkt (P1) des ersten Stufenbereichs (30) bildet, und der zweite Änderungspunkt (P2) einen Ausgangspunkt (P2) des zweiten Stufenbereichs (32) bildet.

3. Mechanismus nach Anspruch 2, wobei der erste Stufenbereich (30) des Wellenverzahnungsabschnitts (22) einen Neigungswinkel (θ) aufweist, der auf einen Wert im Bereich von 5 Grad bis 45 Grad gelegt ist.

4. Mechanismus nach Anspruch 1, wobei unterschiedliche Hauptlastübertragungsbereiche in Abhängigkeit von der Höhe einer Last vorgesehen sind, die auf eine Fläche einwirkt, wo der Wellenverzahnungsabschnitt (22) und der Nabenverzahnungsabschnitt (28) miteinander in Eingriff stehen.

5. Mechanismus nach Anspruch 4, wobei die Höhe der Last selektiv eine niedrige Last, eine mittlere Last und eine hohe Last repräsentiert, und die Hauptlastübertragungsbereiche (a, b, c) zum Übertragen der niedrigen Last, der mittleren und der hohen Last jeweils aufeinanderfolgend in Richtung von einer Ballenoberseite (PO) der balligen Spitze (22a) zu dem Schaft (24) hin angeordnet sind.

6. Mechanismus nach Anspruch 1, wobei das Tal (22b) des Wellenverzahnungsabschnitts (22) einen bogenförmigen Bereich (130) aufweist, der einen vorbestimmten Krümmungsradius hat und sich zu dem Nabenverzahnungsabschnitt (28) hin erstreckt, und die Spitze (28a) des Nabenverzahnungsabschnitts (28) einen Stufenbereich (132) aufweist, der zu dem bogenförmigen Bereich (130) hin weist und von dem Wellenverzahnungsabschnitt (22) weg eingezogen ist.

7. Mechanismus nach Anspruch 6, wobei ein Ausgangspunkt (P1) des bogenförmigen Bereichs (130) im Anschluss an das Tal (22b) des Wellenverzahnungsabschnitts (22) und ein Ausgangspunkt (P2) des Stufenbereichs (132) im Anschluss an die Spitze (28a) des Nabenverzahnungsabschnitts (28) in jeweilige Positionen gelegt sind, die um einen vorbestimmten Abstand voneinander versetzt sind.

8. Mechanismus nach Anspruch 1, wobei das Tal (22b) des Wellenverzahnungsabschnitts (22) einen verjüngten Bereich (32) aufweist, dessen Durchmesser fortschreitend zu dem Nabenverzahnungsabschnitt (28) hin zunimmt, und die Spitze (28a) des Nabenverzahnungsabschnitts (28) einen Stufenbereich (232) aufweist, der zu dem verjüngten Bereich (230) hin weist und von dem Wellenverzahnungsabschnitt (22) weg eingezogen ist.

9. Mechanismus nach Anspruch 8, wobei ein Ausgangspunkt (P1) des verjüngten Bereichs (230) und ein Ausgangspunkt (P2) des Stufenbereichs (232) in jeweilige Positionen gelegt sind, die um einen vorbestimmten Abstand voneinander versetzt sind.

10. Mechanismus nach Anspruch 8, wobei der verjüngte Bereich (230) des Wellenverzahnungsabschnitts (22) einen Anstiegswinkel (θ) hat, der auf einen Wert im Bereich von 6 Grad bis 65 Grad gelegt ist.

11. Mechanismus nach Anspruch 1, wobei die Spitze (28a) des Nabenverzahnungsabschnitts (28) einen verjüngten Bereich (336) aufweist, dessen Durchmesser von dem Wellenverzahnungsabschnitt (22) weg fortschreitend zunimmt.

12. Mechanismus nach Anspruch 1, wobei die Spitze (28a) des Nabenverzahnungsabschnitts (28) einen bogenförmigen Bereich (338) aufweist, der einen vorbestimmten Krümmungsradius hat und von dem Wellenverzahnungsabschnitt (22) weg eingezogen ist.

13. Mechanismus nach Anspruch 1, wobei die Spitze (22a) des Wellenverzahnungsabschnitts (22) einen Außendurchmesser hat, der in der Achsrichtung der Welle (12) konstant ist.

14. Mechanismus nach Anspruch 1, wobei die Spitze (22a) des Wellenverzahnungsabschnitts (22) einen Außendurchmesser hat, der in der Achsrichtung der Welle (12) variiert.

15. Mechanismus nach Anspruch 14, wobei die Spitze (22a) des Wellenverzahnungsabschnitts (22) einen Außendurchmesser hat, der zu dem Wellenschaft hin allmählich abnimmt.

16. Mechanismus nach Anspruch 1, wobei unterschiedliche Hauptlastübertragungsbereiche (a, b, c) in Abhängigkeit von der Höhe einer Last vorgesehen sind, die auf einen Bereich einwirkt, wo der Wellenverzahnungsabschnitt (22) und der Nabenverzahnungsabschnitt (28) miteinander in Eingriff stehen.

17. Mechanismus nach Anspruch 16, wobei die Höhe der Last selektiv eine niedrige Last, eine mittlere Last und eine hohe Last repräsentiert, und die Hauptlastübertragungsbereiche (a, b, c) zum Übertragen der niedrigen Last, der mittleren Last und der hohen Last jeweils in Richtung von einer Ballenoberseite (PO) der balligen Spitze (22a) zu dem Wellenschaft (24) hin aufeinanderfolgend angeordnet sind.

## Revendications

1. Un mécanisme de transmission d'un couple entre un arbre (12) et un moyeu (14) disposé autour de l'arbre (12) tout en maintenant une section dentée d'arbre (22) formée sur l'arbre (12) et une section dentée de moyeu (28) formée sur le moyeu (14) en prise l'une avec l'autre, dans lequel
ladite section dentée d'arbre (22) présente une crête (22a) et un creux (22b) possédant un diamètre externe variant d'une extrémité de celle-ci vers une tige d'arbre (24) de l'arbre (12) ; et
ladite section dentée de moyeu (28) possède une crête droite (28a) ayant une épaisseur de dent constante et un diamètre interne variant d'une extrémité de celle-ci vers ladite tige d'arbre (24) et un creux (28b) possédant un diamètre interne constant dans la direction axiale de l'arbre (12),
**caractérisé en ce que**
la crête (22a) de la section dentée d'arbre (22) forme une crête couronnée (22a) possédant une épaisseur de dent variable ; et
qu'un premier point de variation (P1) du diamètre extérieur du creux (22b) de ladite section dentée d'arbre (22) et un deuxième point de variation (P2) du diamètre interne de la crête (28a) de ladite section dentée de moyeu (28) sont disposés dans des positions respectives qui sont décalées l'une par rapport à l'autre dans la direction axiale de l'arbre (12) d'une distance préalablement déterminée (L4).

2. Un mécanisme selon la revendication 1, dans lequel ledit creux (22b) de ladite section dentée d'arbre (22) possède une première région étagée (30) relevée vers ladite section dentée de moyeu (28) et ladite crête (28a) de ladite section dentée de moyeu (28) possède une deuxième région étagée (32) rétractée de ladite section dentée d'arbre (22) et dans lequel le premier point de variation (P1) forme un point de départ (P1) de ladite première région étagée (30) et le deuxième point de variation (P2) forme un point de départ (P2) de ladite deuxième région étagée (32).

3. Un mécanisme selon la revendication 2, dans lequel ladite première région étagée (30) de ladite section dentée d'arbre (22) possède un angle d'inclinaison (θ) réglé à une valeur allant de 5 degrés à 45 degrés.

4. Un mécanisme selon la revendication 1, dans lequel différentes régions de transmission de la charge principale sont prévues en fonction de l'amplitude d'une charge appliquée à une zone dans laquelle ladite section dentée d'arbre (22) et ladite section dentée de moyeu (28) sont en prise l'une avec l'autre.

5. Un mécanisme selon la revendication 4, dans lequel l'amplitude de la charge représente sélectivement une charge faible, une charge moyenne et une charges élevée et lesdites régions de transmission de la charge principale (a, b, c) pour transmettre respectivement la charge faible, la charge moyenne et la charge élevée sont disposées successivement dans une direction allant du sommet de couronnement (P0) d'une crête couronnée (22a) vers ladite tige de l'arbre (24).

6. Un mécanisme selon la revendication 1, dans lequel ledit creux (22b) de ladite section dentée de l'arbre (22) est dotée d'une région arquée (130) possédant un rayon de courbure préalablement déterminé et s'étendant vers ladite section dentée de moyeu (28) et ladite crête (28a) de ladite section dentée de moyeu (28) possède une région étagée (132) tournée vers ladite région arquée (130) et rétractée de ladite section dentée d'arbre (22).

7. Un mécanisme selon la revendication 6, dans lequel un point de départ (P1) de ladite région arquée (130) reliée au creux (22b) de ladite section dentée de l'arbre (22) et un point de départ (P2) de ladite région étagée (132) reliée à la crête (28a) de ladite section dentée de moyeu (28) sont disposés dans des positions respectives qui sont décalées l'une de l'autre d'une distance prédéterminée.

8. Un mécanisme selon la revendication 1, dans lequel ledit creux (22b) de ladite section dentée d'arbre (22) possède une région évasée (230) possédant un diamètre qui augmente progressivement vers ladite section dentée de moyeu (28) et ladite crête (28a) de ladite section dentée de moyeu (28) possède une région étagée (232) tournée vers ladite région évasée (230) et écartée de ladite section dentée d'arbre (22).

9. Mécanisme selon la revendication 8, dans lequel un point de départ (P1) de ladite région évasée (230) et un point de départ (P2) de ladite région étagée (232) sont disposés dans des positions respectives qui sont décalées l'une par rapport à l'autre d'une distance préalablement déterminée.

10. Mécanisme selon la revendication 8, dans lequel ladite région évasée (230) de ladite section dentée d'arbre (22) possède un angle d'élévation (θ) réglé à une valeur allant de 6 degrés à 65 degrés.

11. Un mécanisme selon la revendication 1, dans lequel ladite crête (28a) de ladite section dentée du moyeu (28) possède une région évasée (336) possédant un diamètre augmentant progressivement à partir de ladite section dentée d'arbre (22).

12. Un mécanisme selon la revendication 1, dans lequel ladite crête (28a) de ladite section dentée de moyeu (28) est dotée d'une région arquée (338) possédant un rayon de courbure préalablement déterminé et rétracté de ladite section dentée d'arbre (22).

13. Un mécanisme selon la revendication 1, dans lequel ladite crête (22a) de ladite section dentée d'arbre (22) possède un diamètre extérieur qui est constant dans la direction axiale dudit arbre (12).

14. Un mécanisme selon la revendication 1, dans lequel ladite pointe (22a) de ladite section dentée d'arbre (22) possède un diamètre extérieur qui varie dans la direction axiale dudit arbre (12).

15. Un mécanisme selon la revendication 14, dans lequel ladite crête (22a) de ladite section dentée d'arbre (22) possède un diamètre extérieur qui diminue progressivement vers ladite tige d'arbre (24).

16. Un mécanisme selon la revendication 1, dans lequel différentes régions de transmission de la charge principale (a, b, c) sont fournies en fonction de l'amplitude d'une charge appliquée dans une zone dans laquelle ladite section dentée d'arbre (22) et ladite section dentée du moyeu (28) sont en prise l'une avec l'autre.

17. Un mécanisme selon la revendication 16, dans lequel l'amplitude de la charge représente sélectivement une charge faible, une charge moyenne et une charges élevée et lesdites régions de transmission de la charge principale (a, b, c) pour transmettre respectivement la charge faible, la charge moyenne et la charge élevée sont disposées successivement dans une direction à partir du sommet de couronnement (P0) d'une crête couronnée (22a) vers ladite tige d'arbre (24).
